# EUROPEAN PATENT APPLICATION

(11) **EP 4 811 288 A1**
(43) Date of publication of application: **23.09.2026**
(21) Application number: 26166216.7
(22) Date of filing: 19.03.2026
(51) Int. Cl.: G06T 7/73, G06T 7/246, G06T 7/579

(54) **METHOD, APPARATUS, AND SYSTEM OF PROVIDING LOCALIZATION THROUGH MULTIPLE TRIANGULATION PROCESSES**

(30) Priority: 20.03.2025 US 202519084773
(71) Applicant: HERE Global B.V., 5611 ZT Eindhoven (NL)
(72) Inventor: Li,, Yiren, Chicago, 60606 (US); Jin,, Xiaoying, Boulder, 80301 (US)
(74) Representative: Potter Clarkson

(57) **Abstract**

An approach is provided for providing localization through multiple triangulation processes. The approach, for instance, involves detecting a plurality of objects from a set of images, performing 3-point triangulation on the plurality of objects to generate a 3-point triangulation result, and performing one or more triangulations on the 3-point triangulation result to generate one or more triangulation results. The one or more triangulations is 4-or-more-point triangulation, 2-point triangulation, or a combination thereof. The one or more triangulation results is a 4-or-more-point triangulation result, a 2-point triangulation result, or a combination thereof. The approach further involves using a clustering model to consolidate the 3-point triangulation result and the one or more triangulation results as a consolidated localization result and outputting the consolidated localization result.

## Description

### BACKGROUND

Triangulation is a fundamental technique used in various fields such as extracting points of interest (POIs) and map features for 3-dimensional (3D) localization. The process relies on observations from different viewpoints and uses geometric relationships between the viewpoints and the observed object to compute a position, depth, or other spatial attributes of the object. The accuracy and reliability of triangulation are critically dependent on the ability to correctly identify correspondence, that is, matching points or features across different observations.

Identifying correspondences is a crucial task, especially in real-world applications where observations can be affected by noise, occlusions, changes in lighting, and distortions. Correspondence errors can manifest through the triangulation process, resulting in inaccurate or unreliable spatial measurements. Thus, the effectiveness of triangulation hinges on precise determination of these correspondences.

The challenge of identifying correct correspondences becomes even more pronounced in scenarios involving complex scenes involving small objects or objects lacking distinctive patterns. Traditional methods often rely on feature descriptors or similarity metrics to establish correspondences, but these approaches can be computationally intensive, especially when dealing with high-resolution data or large datasets. Furthermore, the process may require extensive manual intervention or iterative refinement to resolve ambiguities, which adds significant time overhead.

### SOME EXAMPLE EMBODIMENTS

Therefore, there is a need for an approach for providing localization that circumvents conventional steps for identifying correspondences.

According to one embodiment, an apparatus comprising at least one processor and at least one non-transitory memory including computer program code instructions is described. The computer program code instructions are configured to, when executed, cause the apparatus to: detect a plurality of objects from a set of images; perform 3-point triangulation on the plurality of objects to generate a 3-point triangulation result; perform one or more triangulations on the 3-point triangulation result to generate one or more triangulation results. The one or more triangulations is 4-or-more-point triangulation, 2-point triangulation, or a combination thereof. The one or more triangulation results is a 4-or-more-point triangulation result, a 2-point triangulation result, or a combination thereof. The computer program code instructions are further configured to, when executed, cause the apparatus to: using a clustering model, consolidate the 3-point triangulation result and the one or more triangulation results as a consolidated localization result; and output the consolidated localization result.

In some embodiments, the set of images is chronologically consecutive images captured by an image capture sensor that was in motion.

In some embodiments, the plurality of objects is grouped as one or more combinations, and each of the one or more combinations includes one of the plurality of objects for each of the set of images. In such embodiments, to perform the 3-point triangulation, the computer program code instructions are configured to, when executed, cause the apparatus to: determine a direction of motion of the set of images; based on the direction of motion, select from the one or more combinations to provide one or more selected combinations; and perform the 3-point triangulation on the one or more selected combinations to generate the 3-point triangulation result.

In some embodiments, each of the one or more selected combinations indicates a set from the plurality of objects that is consistent with the direction of motion.

In some embodiments, to perform the 3-point triangulation, the computer program code instructions are configured to, when executed, cause the apparatus to: perform the 3-point triangulation on the plurality of objects to generate 3 dimensional (3D) coordinates; project the 3D coordinates into 2 dimensional (2D) points corresponding to the plurality of objects to generate reprojection error for the 3D coordinates; compare the reprojection error to a threshold value; responsive to the reprojection error value satisfying the threshold value, include the 3D coordinates as a part of the 3-point triangulation result; and responsive to the reprojection error failing to satisfy the threshold value, exclude the 3D coordinates as a part of the 3-point triangulation result.

In some embodiments, to perform the 3-point triangulation, the computer program code instructions are configured to, when executed, cause the apparatus to: perform the 3-point triangulation on the plurality of objects to generate 3 dimensional (3D) coordinates; determine a distance between an image capture sensor that captured the set of images and the 3D coordinates; compare the distance to a threshold distance; responsive to the distance satisfying the threshold distance, include the 3D coordinates as a part of the 3-point triangulation result; and responsive to the distance failing to satisfying the threshold distance, exclude the 3D coordinates as a part of the 3-point triangulation result.

In some embodiments, to perform the 3-point triangulation, the computer program code instructions are configured to, when executed, cause the apparatus to: perform the 3-point triangulation on the plurality of objects to generate 3 dimensional (3D) coordinates; determine a direction from an image capture sensor that captured the set of images to the 3D coordinates; determine an angle of the direction to a camera bearing; compare the angle to a threshold angle; responsive to the angle satisfying the threshold angle, include the 3D coordinates as a part of the 3-point triangulation result; and responsive to the angle failing to satisfy the threshold angle, exclude the 3D coordinates as a part of the 3-point triangulation result.

In some embodiments, to perform the 4-or-more-point triangulation, the computer program code instructions are configured to, when executed, cause the apparatus to: determine whether the 3-point triangulation result indicates at least one of the plurality of objects that is used for performing the 3-point triangulation and one or more additional 3-point triangulations; responsive to the 3-point triangulation result indicating the at least one of the plurality of objects that is used for performing the 3-point triangulation and the one or more additional 3-point triangulations, merge the 3-point triangulation result and one or more additional 3-point triangulation results from the one or more additional 3-point triangulations to form correspondences with 4 or more points; and perform the 4-or-more-point triangulation on the 4 or more points to generate the 4-or-more-point triangulation result.

In some embodiments, to perform the 2-point triangulation, the computer program code instructions are configured to, when executed, cause the apparatus to identify a subset of the set of images. The subset includes: (i) a first subset of the plurality of objects used for producing the 3-point triangulation result, the 4-or-more-point triangulation result, or a combination thereof; and (ii) a second subset of the plurality of objects that is not used for producing any triangulation result. The computer program code instructions are further configured to, when executed, cause the apparatus to: use a plurality of points of the first subset to estimate a homography matrix from a first image of the subset to a second image of the subset; apply the homography matrix to project a point of a first object of the second subset in the first image to the second image; determine whether the point falls within a second object of the second subset in the second image; and responsive to the point falling within the second object, provide the 2-point triangulation result to indicate that the first object and the second object are matched for establishing correspondence.

In some embodiments, to perform the 2-point triangulation, the computer program code instructions are configured to, when executed, cause the apparatus to: determine whether the 2-point triangulation result indicates at least one of the plurality of objects that is used for performing the 2-point triangulation and one or more additional 2-point triangulations; responsive to the 2-point triangulation result indicating the at least one of the plurality of objects that is used for performing the 2-point triangulation and the one or more additional 2-point triangulations, merge the 2-point triangulation result and one or more additional 2-point triangulation results from the one or more additional 2-point triangulations to form correspondences with 3 or more points; perform 3-or-more-point triangulation on the 3 or more points to generate a 3-or-more point triangulation result; and provide the 3-or-more point triangulation result as a part of the one or more triangulation results.

In one embodiment, a non-transitory computer-readable storage medium having computer program code instructions stored therein is described. The computer program code instructions, when executed by at least one processor, cause the at least one processor to: detect a plurality of objects from a set of images; perform 3-point triangulation on the plurality of objects to generate a 3-point triangulation result; and perform one or more triangulations on the 3-point triangulation result to generate one or more triangulation results. The one or more triangulations is 4-or-more-point triangulation, 2-point triangulation, or a combination thereof. The one or more triangulation results is a 4-or-more-point triangulation result, a 2-point triangulation result, or a combination thereof. The computer program code instructions, when executed by the at least one processor, further cause the at least one processor to: using a clustering model, consolidate the 3-point triangulation result and the one or more triangulation results as a consolidated localization result; and output the consolidated localization result.

In one embodiment, a method of providing localization through multiple triangulation processes is described. The method includes: detecting a plurality of objects from a set of images; performing 3-point triangulation on the plurality of objects to generate a 3-point triangulation result; and performing one or more triangulations on the 3-point triangulation result to generate one or more triangulation results. The one or more triangulations is 4-or-more-point triangulation, 2-point triangulation, or a combination thereof. The one or more triangulation results is a 4-or-more-point triangulation result, a 2-point triangulation result, or a combination thereof. The method further includes: using a clustering model, consolidating the 3-point triangulation result and the one or more triangulation results as a consolidated localization result; and outputting the consolidated localization result.
The following numbered paragraphs are also disclosed:
1. An apparatus comprising at least one processor and at least one non-transitory memory including computer program code instructions, the computer program code instructions configured to, when executed, cause the apparatus to:
   detect a plurality of objects from a set of images;
   perform 3-point triangulation on the plurality of objects to generate a 3-point triangulation result;
   perform one or more triangulations on the 3-point triangulation result to generate one or more triangulation results, wherein the one or more triangulations is 4-or-more-point triangulation, 2-point triangulation, or a combination thereof, and wherein the one or more triangulation results is a 4-or-more-point triangulation result, a 2-point triangulation result, or a combination thereof;
   using a clustering model, consolidate the 3-point triangulation result and the one or more triangulation results as a consolidated localization result; and
   output the consolidated localization result.
2. The apparatus of paragraph 1, wherein the set of images is chronologically consecutive images captured by an image capture sensor that was in motion.
3. The apparatus of paragraph 2, wherein the plurality of objects is grouped as one or more combinations, wherein each of the one or more combinations includes one of the plurality of objects for each of the set of images, and wherein, to perform the 3-point triangulation, the computer program code instructions are configured to, when executed, cause the apparatus to:
   determine a direction of motion of the set of images;
   based on the direction of motion, select from the one or more combinations to provide one or more selected combinations; and
   perform the 3-point triangulation on the one or more selected combinations to generate the 3-point triangulation result.
4. The apparatus of paragraph 3, wherein each of the one or more selected combinations indicates a set from the plurality of objects that is consistent with the direction of motion.
5. The apparatus of paragraph 1, wherein, to perform the 3-point triangulation, the computer program code instructions are configured to, when executed, cause the apparatus to:
   perform the 3-point triangulation on the plurality of objects to generate 3 dimensional (3D) coordinates;
   project the 3D coordinates into 2 dimensional (2D) points corresponding to the plurality of objects to generate reprojection error for the 3D coordinates;
   compare the reprojection error to a threshold value;
   responsive to the reprojection error value satisfying the threshold value, include the 3D coordinates as a part of the 3-point triangulation result; and
   responsive to the reprojection error failing to satisfy the threshold value, exclude the 3D coordinates as a part of the 3-point triangulation result.
6. The apparatus of paragraph 1, wherein, to perform the 3-point triangulation, the computer program code instructions are configured to, when executed, cause the apparatus to:
   perform the 3-point triangulation on the plurality of objects to generate 3 dimensional (3D) coordinates;
   determine a distance between an image capture sensor that captured the set of images and the 3D coordinates;
   compare the distance to a threshold distance;
   responsive to the distance satisfying the threshold distance, include the 3D coordinates as a part of the 3-point triangulation result; and
   responsive to the distance failing to satisfying the threshold distance, exclude the 3D coordinates as a part of the 3-point triangulation result.
7. The apparatus of paragraph 1, wherein, to perform the 3-point triangulation, the computer program code instructions are configured to, when executed, cause the apparatus to:
   perform the 3-point triangulation on the plurality of objects to generate 3 dimensional (3D) coordinates;
   determine a direction from an image capture sensor that captured the set of images to the 3D coordinates;
   determine an angle of the direction to a camera bearing;
   compare the angle to a threshold angle;
   responsive to the angle satisfying the threshold angle, include the 3D coordinates as a part of the 3-point triangulation result; and
   responsive to the angle failing to satisfy the threshold angle, exclude the 3D coordinates as a part of the 3-point triangulation result.
8. The apparatus of paragraph 1, wherein, to perform the 4-or-more-point triangulation, the computer program code instructions are configured to, when executed, cause the apparatus to:
   determine whether the 3-point triangulation result indicates at least one of the plurality of objects that is used for performing the 3-point triangulation and one or more additional 3-point triangulations;
   responsive to the 3-point triangulation result indicating the at least one of the plurality of objects that is used for performing the 3-point triangulation and the one or more additional 3-point triangulations, merge the 3-point triangulation result and one or more additional 3-point triangulation results from the one or more additional 3-point triangulations to form correspondences with 4 or more points; and
   perform the 4-or-more-point triangulation on the 4 or more points to generate the 4-or-more-point triangulation result.
9. The apparatus of paragraph 1, wherein, to perform the 2-point triangulation, the computer program code instructions are configured to, when executed, cause the apparatus to:
   identify a subset of the set of images, wherein the subset includes:
      (i) a first subset of the plurality of objects used for producing the 3-point triangulation result, the 4-or-more-point triangulation result, or a combination thereof; and
      (ii) a second subset of the plurality of objects that is not used for producing any triangulation result;
   use a plurality of points of the first subset to estimate a homography matrix from a first image of the subset to a second image of the subset;
   apply the homography matrix to project a point of a first object of the second subset in the first image to the second image;
   determine whether the point falls within a second object of the second subset in the second image; and
   responsive to the point falling within the second object, provide the 2-point triangulation result to indicate that the first object and the second object are matched for establishing correspondence.
10. The apparatus of paragraph 9, wherein, to perform the 2-point triangulation, the computer program code instructions are configured to, when executed, cause the apparatus to:
   determine whether the 2-point triangulation result indicates at least one of the plurality of objects that is used for performing the 2-point triangulation and one or more additional 2-point triangulations;
   responsive to the 2-point triangulation result indicating the at least one of the plurality of objects that is used for performing the 2-point triangulation and the one or more additional 2-point triangulations, merge the 2-point triangulation result and one or more additional 2-point triangulation results from the one or more additional 2-point triangulations to form correspondences with 3 or more points;
   perform 3-or-more-point triangulation on the 3 or more points to generate a 3-or-more point triangulation result; and
   provide the 3-or-more point triangulation result as a part of the one or more triangulation results.
11. A non-transitory computer-readable storage medium having computer program code instructions stored therein, the computer program code instructions, when executed by at least one processor, cause the at least one processor to:
   detect a plurality of objects from a set of images;
   perform 3-point triangulation on the plurality of objects to generate a 3-point triangulation result;
   perform one or more triangulations on the 3-point triangulation result to generate one or more triangulation results, wherein the one or more triangulations is 4-or-more-point triangulation, 2-point triangulation, or a combination thereof, and wherein the one or more triangulation results is a 4-or-more-point triangulation result, a 2-point triangulation result, or a combination thereof; and
   using a clustering model, consolidate the 3-point triangulation result and the one or more triangulation results as a consolidated localization result; and
   output the consolidated localization result.
12. The non-transitory computer-readable storage medium of paragraph **11,** wherein the set of images is chronologically consecutive images captured by an image capture sensor that was in motion.
13. The non-transitory computer-readable storage medium of paragraph 12, wherein the plurality of objects is grouped as one or more combinations, wherein each of the one or more combinations includes one of the plurality of objects for each of the set of images, and wherein, to perform the 3-point triangulation, the computer program code instructions, when executed by the at least one processor, cause the at least one processor to:
   determine a direction of motion of the set of images;
   based on the direction of motion, select from the one or more combinations to provide one or more selected combinations; and
   perform the 3-point triangulation on the one or more selected combinations to generate the 3-point triangulation result.
14. The non-transitory computer-readable storage medium of paragraph **11,** wherein, to perform the 4-or-more-point triangulation, the computer program code instructions, when executed by the at least one processor, cause the at least one processor to:
   determine whether the 3-point triangulation result indicates at least one of the plurality of objects that is used for performing the 3-point triangulation and one or more additional 3-point triangulations;
   responsive to the 3-point triangulation result indicating the at least one of the plurality of objects that is used for performing the 3-point triangulation and the one or more additional 3-point triangulations, merge the 3-point triangulation result and one or more additional 3-point triangulation results from the one or more additional 3-point triangulations to form correspondences with 4 or more points; and
   perform the 4-or-more-point triangulation on the 4 or more points to generate the 4-or-more-point triangulation result.
15. The non-transitory computer-readable storage medium of paragraph 11, wherein, to perform the 2-point triangulation, the computer program code instructions, when executed by the at least one processor, cause the at least one processor to:
   identify a subset of the set of images, wherein the subset includes:
      (i) a first subset of the plurality of objects used for producing the 3-point triangulation result, the 4-or-more-point triangulation result, or a combination thereof; and
      (ii) a second subset of the plurality of objects that is not used for producing any triangulation result;
   use a plurality of points of the first subset to estimate a homography matrix from a first image of the subset to a second image of the subset;
   apply the homography matrix to project a point of a first object of the second subset in the first image to the second image;
   determine whether the point falls within a second object of the second subset in the second image; and
   responsive to the point falling within the second object, provide the 2-point triangulation result to indicate that the first object and the second object are matched for establishing correspondence.
16. A method comprising:
   detecting a plurality of objects from a set of images;
   performing 3-point triangulation on the plurality of objects to generate a 3-point triangulation result;
   performing one or more triangulations on the 3-point triangulation result to generate one or more triangulation results, wherein the one or more triangulations is 4-or-more-point triangulation, 2-point triangulation, or a combination thereof, and wherein the one or more triangulation results is a 4-or-more-point triangulation result, a 2-point triangulation result, or a combination thereof; and
   using a clustering model, consolidating the 3-point triangulation result and the one or more triangulation results as a consolidated localization result; and
   outputting the consolidated localization result.
17. The method of paragraph 16, wherein the set of images are chronologically consecutive images captured by an image capture sensor that was in motion.
18. The method of paragraph 17, wherein the plurality of objects is grouped as one or more combinations, wherein each of the one or more combinations includes one of the plurality of objects for each of the set of images, and wherein the performing the 3-point triangulation comprises:
   determining a direction of motion of the set of images;
   based on the direction of motion, selecting from the one or more combinations to provide one or more selected combinations; and
   performing the 3-point triangulation on the one or more selected combinations to generate the 3-point triangulation result.
19. The method of paragraph 16, wherein the performing the 4-or-more-point triangulation comprises:
   determining whether the 3-point triangulation result indicates at least one of the plurality of objects that is used for performing the 3-point triangulation and one or more additional 3-point triangulations;
   responsive to the 3-point triangulation result indicating the at least one of the plurality of objects that is used for performing the 3-point triangulation and the one or more additional 3-point triangulations, merging the 3-point triangulation result and one or more additional 3-point triangulation results from the one or more additional 3-point triangulation to form correspondences with 4 or more points; and
   performing the 4-or-more-point triangulation on the 4 or more points to generate the 4-or-more-point triangulation result.
20. The method of paragraph 16, wherein the performing the 2-point triangulation comprises:
   identifying a subset of the set of images, wherein the subset includes:
      (i) a first subset of the plurality of objects used for producing the 3-point triangulation result, the 4-or-more-point triangulation result, or a combination thereof; and
      (ii) a second subset of the plurality of objects that is not used for producing any triangulation result;
   using a plurality of points of the first subset to estimate a homography matrix from a first image of the subset to a second image of the subset;
   applying the homography matrix to project a point of a first object of the second subset in the first image to the second image;
   determining whether the point falls within a second object of the second subset in the second image; and
   responsive to the point falling within the second object, providing the 2-point triangulation result to indicate that the first object and the second object are matched for establishing correspondence.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 illustrates a diagram of a system for providing localization through multiple triangulation processes, according to an embodiment;
FIG. 2 illustrates a diagram of components of a localization platform, according to an embodiment;
FIG. 3 illustrates an image including a plurality of objects, according to an embodiment;
FIG. 4 illustrates a set of images indicating a direction of motion and objects detected within the set of images, according to an embodiment;
FIG. 5 illustrates an example of projecting correct 3D coordinates into an image, according to an embodiment;
FIG. 6 illustrates an example of projecting incorrect 3D coordinates into an image, according to an embodiment;
FIGS. 7A-7C illustrate examples of providing 2-point triangulation on a set of images, according to an embodiment;
FIG. 8 illustrates a flowchart of a process for detecting a plurality of objects from a set of images, according to an embodiment;
FIG. 9 illustrates a flowchart of a process for performing 3-point triangulation, according to an embodiment;
FIG. 10 illustrates a flowchart of a process for providing 4-or-more-point triangulation, according to an embodiment;
FIGS. 11A, 11B, and 11C illustrate a flowchart of a process for providing 2-or-more-point triangulation, according to an embodiment;
FIG. 12 illustrates a flowchart of a process for consolidating a 4-or-more-point triangulation result, a final 3-point triangulation result, and a triangulation result as a localization result;
FIG. 13 illustrates a diagram of a user interface showing a plan view of a geographical area and localization results of map features, according to an embodiment;
FIG. 14 illustrates a diagram of a database, according to an embodiment;
FIG. 15 illustrates a computer system upon which an embodiment of the invention may be implemented;
FIG. 16 illustrates a diagram of a chip set upon which an embodiment of the invention may be implemented; and
FIG. 17 illustrates a diagram of exemplary components of a mobile terminal capable of operating in the system of FIG. 1, according to one embodiment.

### DESCRIPTION OF SOME EMBODIMENTS

Examples of a method, apparatus, and computer program for providing localization through multiple triangulation processes are disclosed, according to various example embodiments. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Localization is particularly useful for extracting POIs and map features such as building accessors (e.g., doors, building entrances), storefronts, signs, and traffic signals from street-level images and generates geographic coordinates of the map features in latitude, longitude, and altitude. Effectiveness of triangulation is directly impacted by accuracy of input data. For example, triangulation heavily depends on correctly identifying correspondences, which involve observing the same object from multiple viewpoints. Identifying correspondences commonly involves detecting key points with conventional detection algorithms such as SIFT (Scale-Invariant Feature Transform), SURF (Speeded Up Robust Features), and ORB (Oriented FAST and Rotated BRIEF), and using a key point matching algorithm such as FLANN (Fast Library for Approximate Nearest Neighbors), or BFMatcher (Brute-Force Matcher), or template matching.

Since such conventional algorithms require identifying correct correspondences, performing localization through said algorithms can be time-consuming and computationally costly. Additionally, when objects of interest are too small or lacking distinctive patterns, finding key points becomes challenging. Additionally, localizing objects of interest often requires finding distinctive and easily recognizable key points on the objects across multiple images; however, performing localization on the objects through the conventional algorithms is often infeasible when the objects are small or lacking distinctive patterns.

To address these challenges, a method, apparatus, and system of the present disclosure performs multiple triangulation processes that provide accurate localization results and also circumvent conventional steps of using key point detections and matching algorithms to save computing resources.

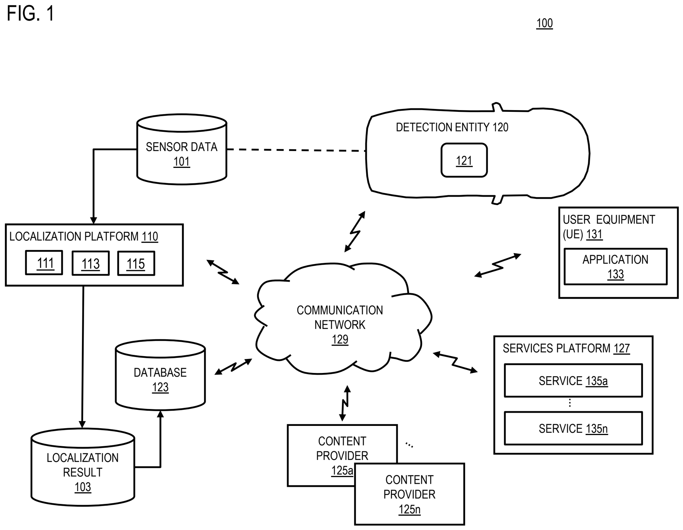

FIG. 1 illustrates a diagram of a system 100 for providing localization through multiple triangulation processes, according to an embodiment. The system 100 includes a localization platform 110 that is configured to receive sensor data 101 from a detection entity 120 and perform multiple triangulation processes on the sensor data 101 to output a consolidated localization result 103. In the illustrated embodiment, the detection entity 120 is a vehicle that is equipped with sensors 121, such as image capturing sensors. The sensors 121 may capture images of an environment of the detection entity 120. In one embodiment, the sensors 121 may be positioned along the sides of the vehicle, and capture images of the environment from a field of view projecting from the side of the vehicle. In one embodiment, the sensors 121 may capture a set of images while the detection entity 120 is in motion. Accordingly, the set of images may indicate chronologically consecutive images, thus providing opportunities for an object of interest to be detected in multiple images and enabling localization to be performed on the set of images.

The localization platform 110 may be a platform with multiple interconnected components. In such embodiment, the localization platform 110 may include multiple servers, intelligent networking devices, computing devices, components, and corresponding software for performing localization. In the illustrated embodiment, the localization platform 110 includes a detection module 111, a localization module 113, and a consolidation module 115. The detection module 111 is configured to detect a plurality of objects from the set of images included in the sensor data 101. The plurality of objects may indicate objects of interests detected from the set of images, such as locations of POIs and map features such as building accessors, storefronts, signs, traffic signals, etc. The plurality of objects may label the objects of interest from the set of images in forms of bounding boxes. The localization module 111 is configured to perform multiple triangulation processes on the plurality of objects to provide various triangulation results.

In one embodiment, the triangulation processes include performing 3 point triangulation on the plurality of objects to yield a 3 point triangulation result, performing 4-or-more-point triangulation on the 3 point triangulation result to yield a 4-or-more point triangulation result, and performing 2 point triangulation on the 3 point triangulation and the 4-or-more-point triangulation to yield a 2 point triangulation result. In such embodiment, each of the triangulation processes may be supplemented with a noise removal step. The consolidation module 113 consolidates the 3 point triangulation result, the 4-or-more point triangulation result, and the 2 point triangulation result to provide the localization result 107.

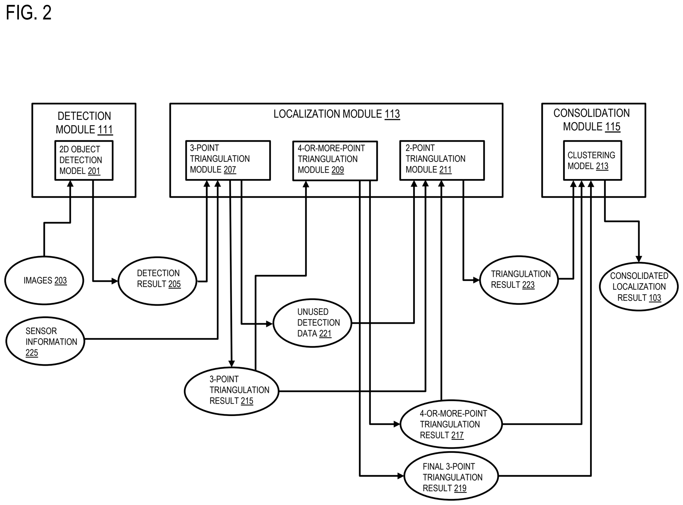

FIG. 2 illustrates a diagram of components of the localization platform 110, according to an embodiment. In the illustrated embodiment, the detection module 111 includes a 2 dimensional (2D) object detection model 201, the localization module 113 includes a 3-point triangulation module 207, a 4-or-more point triangulation module 209, and a 2-point triangulation module 211, and the consolidation module 115 includes a clustering model 213.

In the illustrated embodiment, the 2D object detection module 201 receives images 203. In one embodiment, the images 203 may be a set of chronologically consecutive images captured by an image capture sensor that was in motion (e.g., a vehicle including a camera). In one embodiment, the 2D object detection module 201 receives the images 203 as the sensor data 101 from the detection entity 120. It should be appreciated that the 2D object detection module 201 is not limited to receiving images from the detection entity 120 and is capable of receiving images from any other sources.

Once the 2D object detection module 201 receives the images 203, the 2D object detection module 201 detects a plurality of objects from the images 203 to yield a detection result 205. In one embodiment, the 2D object detection model 201 may be a deep learning architecture, such as YOLOv7, YOLOv8, YOLOv9, Faster R-CNN, EfficientDet, or any equivalent machine learning model. The deep learning architecture may be configured to perform feature extraction, feature fusion, and prediction to yield the plurality of objects. For example, during the feature extraction, the images 203 may pass through a backbone of the deep learning architecture (e.g., E-ELAN) to extract meaningful features. The backbone may extract high-level features from the images 203 using a convolutional neural network (CNN). The network may generate hierarchical feature maps of varying sizes to detect objects at multiple scales. During the feature fusion, multi-scale feature maps are fused in a neck of the deep learning architecture using techniques like Path Aggregation Network (PAN) and Feature Pyramid Network (FPN). Finally, during the prediction stage, a head of the deep learning architecture provides the plurality of objects in a form of bounding boxes. The detection result 205 may include the bounding boxes, where the bounding boxes represent objects of interest within the images 203, such as locations of POIs and map features such as building accessors, storefronts, signs, traffic signals, etc. In one embodiment, the plurality of objects may indicate a center point for each of the bounding boxes. In one embodiment, during the prediction stage, an object confidence score and a class probability score are further generated. In such embodiment, the object confidence score indicates a probability that a predicted bounding box contains an object, and the class probability indicates a likelihood of an object belonging to a class.

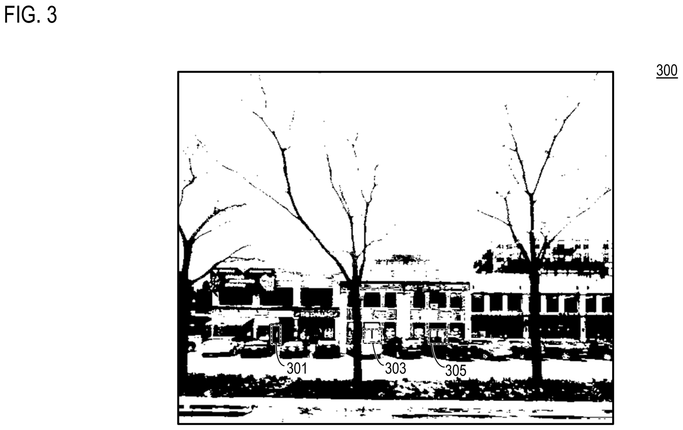

FIG. 3 illustrates an image 300 including a plurality of objects 301, 303, and 305, according to an embodiment. In the illustrated embodiment, the image 300 indicates a field of view facing towards buildings located along a side of a street. The 2D object detection module 201 processed the image 300 to detect the plurality of objects 301, 303, and 305. In the illustrated embodiment, the objects of interest are building accessors, such as doors. The plurality of objects 301, 303, and 305 labels the objects of interest from the image 300 in forms of bounding boxes.

In one embodiment, the 2D object detection module 201 outputs the plurality of objects as a part of the detection result 205. The plurality of objects may be used by the localization module 113 for performing multiple triangulation processes. Specifically, each of the 3-point triangulation module 207, the 4-or-more point triangulation module 209, and the 2-point triangulation module 211 contains a triangulation method and a noise removal process. As discussed above, triangulation, which is a method frequently employed in 3D localization to measure a point's 3D position based the point's 2D observations from multiple images, is known for its high precision. However, its effectiveness heavily depends on correctly establishing correspondence, which involves identifying the same point of interest in different images taken from multiple viewpoints. Incorrect correspondence leads to erroneous localization result, and identifying the right correspondence is often a challenging, time-consuming, and computationally intensive process. To overcome the aforementioned challenge, the 3-point triangulation module 207, the 4-or-more point triangulation module 209, and the 2-point triangulation module 211 provide triangulation processes that circumvent the process of establishing correct correspondences. Specifically, each of the 3-point triangulation module 207, the 4-or-more point triangulation module 209, and the 2-point triangulation module 211 performs triangulation on a candidate with unverified correspondences and implements a noise removal process to remove incorrect results caused by incorrect correspondences. The 3-point triangulation module 207, the 4-or-more-point triangulation module 209, and the 2-point triangulation module 211 also work in a synergistic manner to improve the quality of an output localization result. Specifically, the 4-or-more-point triangulation module 209 cleans and validates the output of the 3-point triangulation module 207, and the output of the 2-point triangulation module 211 complements and enhances the work done by the 3-point triangulation module 207 and 4-or-more-point triangulation module 209, thereby effectively catching points potentially missed by the 3-point triangulation module 207 and 4-or-more-point triangulation module 209.

In the illustrated embodiment, the 3-point triangulation module 207 receives the detection result 205. In one embodiment, the 3-point triangulation module 207 may perform 3-point triangulation on the detection result 205 by converting the center points of the bounding boxes provided in the detection result 205 into geographic locations in latitude, longitude, and altitude. The 3-point triangulation is a method used in navigation to determine an unknown position using three known reference points. For example, the 3-point triangulation module 207 may receive sensor information 225 indicating attributes (e.g., camera position in geo-coordinates, camera intrinsic and extrinsic parameters, etc.) of a sensor (e.g., sensors 121) that acquired the images 203 and use the information for performing the 3-point triangulation. In such example, the 3-point triangulation module 207 may use the camera's intrinsic parameters (e.g., focal length, principal point, etc.) and the known camera positions and camera extrinsic parameters (e.g., camera rotation and translation) to cast projection rays from each camera position to the object's image location. Each projection ray may represent a potential spatial line along which the object must lie. With three such rays from different camera positions, the 3-point triangulation module 207 may determine the object's 3D position by finding the intersection point. Finally, the object's 3D coordinates in the global frame are determined by computing the best-fit intersection of the three projection rays. In one embodiment, 3D coordinates provided from the 3-point triangulation may be included as a part of a 3-point triangulation result 215, and the 3-point triangulation module 207 may output the 3-point triangulation result 215.

In one embodiment, the plurality of objects as indicated in the detection results 205 may be grouped as one or more combinations, and the 3-point triangulation module 207 may perform 3-point triangulation on the one or more combinations. In such embodiment, each of the one or more combinations includes only one of the plurality of objects for each of the images 203. For example, for 3 consecutive images A, B, and C, if the 2D object detection model 201 provides 4 detected objects in image A, 3 detected objects in image B, and 2 detected objects in image C, there would be 24 combinations, and each of the combinations would include one detected object for each of the images A, B, and C.

In one embodiment, the 3-point triangulation module 207 may not perform 3-point triangulation for all combinations of the plurality of objects. To reduce computational burden on a system implementing the 3-point triangulation module 207, the combinations may be filtered out based on consistency of the plurality of objects with a direction of motion of the images 203. To determine the consistency, the 3-point triangulation module 207 may determine the direction of motion of the images 203. For example, the sensor information 225 may include information indicating the direction of motion of the images 203 (e.g., time stamp, location information, etc.), and the 3-point triangulation module 207 may use the information 225 to identify the direction of motion of the images 203. Once the direction of motion of the images 203 is determined, a set of the plurality of objects for each of the one or more combinations is compared against the direction of motion of the images 203. If the images 203 indicate that the set of the plurality of objects for a combination progressively moves in a direction opposing the direction of motion, the combination is selected, and the 3-point triangulation is performed on the selected combination.

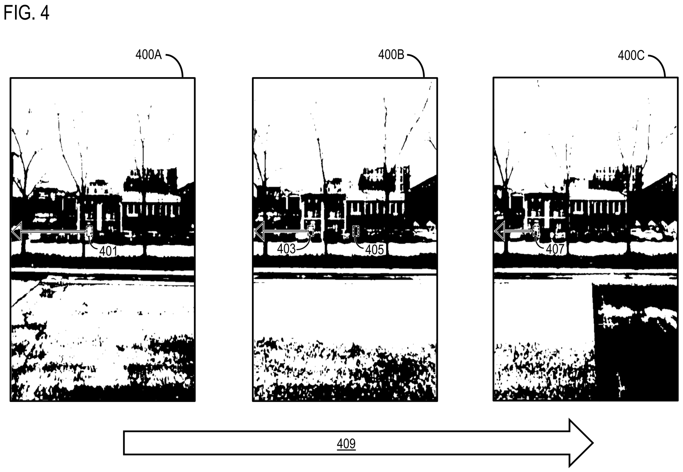

For example, FIG. 4 illustrates a set of images 400A, 400B, and 400C indicating a direction of motion 409 and objects 401, 403, 405, and 407 detected within the set of images 400A, 400B, and 400C, according to an embodiment. In the illustrated embodiment, the set of images 400A, 400B, and 400C is a set of chronologically consecutive images. An image capturing sensor that captured the set of images 400A, 400B, and 400C was moving along the direction of motion 409. The objects 401, 403, 405, and 407 are bounding boxes that predict objects detected therein as building accessors. In the first image 400A, the first object 401 is detected, in the second image 400B, the second object 403 and the third object 405 are detected, and in the third image 400C, the fourth object 407 is detected. The first object 401, the second object 403, and the fourth object 407 are grouped to form a first combination, and the first object 401, the third object 405, and the fourth 407 are grouped to form a second combination. The first combination indicates that: (i) the first object 401 is positioned at a first distance from the left edge of the first image 400A; (ii) the second object 403 is positioned at a second distance from the left edge of the second image 400B, where the second distance is lesser than the first distance; and (iii) the fourth object 407 is positioned at a third distance from the left edge of the third image 400C, where the third distance is lesser than the first distance or the second distance. As such, the first combination indicates objects that progressively move in a direction opposing the direction of motion 409, and the first combination is consistent with the direction of motion 409. Conversely, the second combination indicates that: (i) the first object 401 is positioned at a first distance from the left edge of the first image 400A; (ii) the third object 405 is positioned at a second distance from the left edge of the second image 400B, where the second distance is greater than the first distance; and (iii) the fourth object 407 is positioned at a third distance from the left edge of the third image 400C, where the third distance is lesser than the first distance or the second distance. Since the second distance is greater than the first distance, the second combination does not indicate objects that progressively move in a direction opposing the direction of motion 409, and the second combination is not consistent with the direction of motion 409. Accordingly, the first combination is selected for 3-point triangulation, and the second combination is not selected for the 3-point triangulation.

In one embodiment, once the 3-point triangulation is performed, the 3-point triangulation module 207 performs one or more noise removal processes on the 3-point triangulation result 215 to remove incorrect triangulation results. The noise removal processes include reprojection error filtering, distance filtering, and camera bearing filtering.

For the reprojection error filtering, 3D coordinates generated by the 3-point triangulation are projected back into 2D points on the images 203 to yield re-projection error. If correct correspondences were established and the 3D coordinates were correct, the re-projection error would be small. As such, the re-projected 2D points should be very close to, if not completely overlapping with, the original 2D points used in the 3-point triangulation. An absolute or relative threshold is needed for determining if the reprojection error is too large. In one embodiment, if a projected 2D point deviates horizontally by more than a threshold value (e.g., 15%) of the detection bounding box width or vertically by more than a threshold value (e.g., 15%) of the detection bounding box height, the reprojection error would be considered too large, and the 3D coordinates are excluded as a part of the 3-point triangulation result 215; however, if the deviations of the projected 2D point is equal to or less than the threshold values, the 3D coordinates are included as a part of the 3-point triangulation result 215.

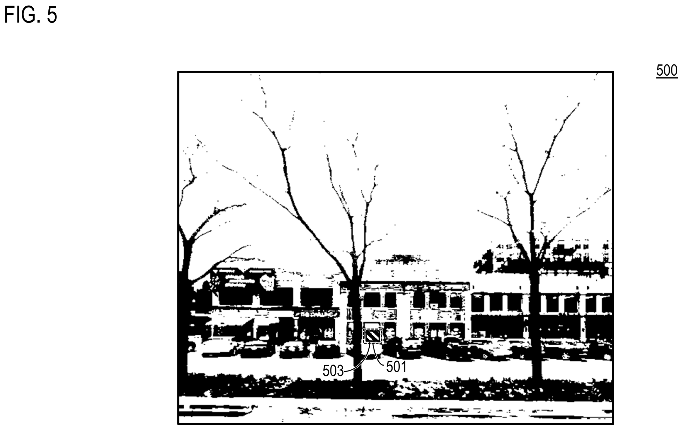

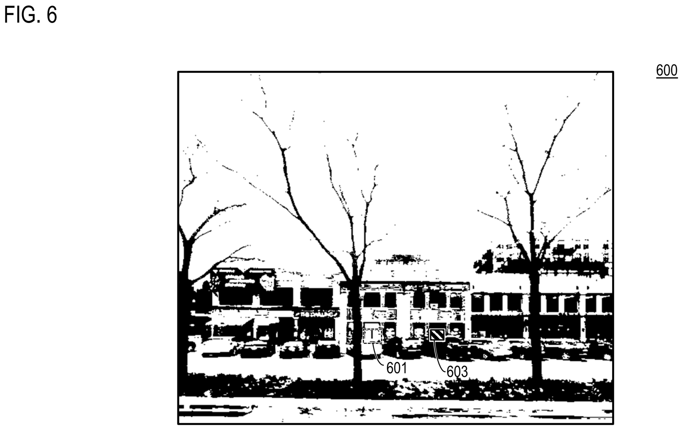

FIG. 5 illustrates an example of projecting correct 3D coordinates into an image 500, according to an embodiment. In the illustrated embodiment, the image 500 includes a bounding box 501 and a projected point 503 representing the 3D coordinates derived from 3-point triangulation. Since the projected point 503 is positioned at the center of the bounding box 501, the 3D coordinates are included as a part of the 3-point triangulation result 215. Conversely, FIG. 6 illustrates an example of projecting incorrect 3D coordinates into an image 600, according to an embodiment. In the illustrated embodiment, the image 600 includes a bounding box 601 and a projected point 603 representing the 3D coordinates derived from 3-point triangulation. In such embodiment, the projected point 603 is positioned outside the bounding box 601 and horizontally deviates from the bounding box 601 at a distance greater than a threshold distance. As such, the 3D coordinates are excluded as a part of the 3-point triangulation result 215.

While the reprojection error filtering can remove most incorrect triangulation results, the filter may still fail to exclude certain incorrect results. Such results tend to fall into three common categories:
(1) the triangulation results are too far away from the camera;
(2) the triangulation results are behind the camera; and
(3) the triangulation results are too close to the camera.

For triangulation results that are too far away from the camera, such results can be properly addressed with the distance filtering. For distance filtering, the 3-point triangulation module 207 determines a distance between the image capture sensor that captured the images 203 and the 3D coordinates derived from the 3-point triangulation. Then, the 3-point triangulation 207 compares the distance to a threshold distance (e.g., 40 meters), and if the distance satisfies the threshold distance (e.g., the distance is equal to or less than 40 meters), the 3-point triangulation 207 includes the 3D coordinates as a part of the 3-point triangulation result 215. Conversely, if the distance does not satisfy the threshold distance (e.g., the distance is greater than 40 meters), the 3-point triangulation 207 excludes the 3D coordinates as a part of the 3-point triangulation result 215.

For triangulation results that are behind the camera, such results can be properly addressed with the camera bearing filtering. For the camera bearing filtering, the 3-point triangulation module 207 determines a direction from the image capture sensor that captured the images 203 to the 3D coordinates. Then, the 3-point triangulation module 207 determines an angle of the direction to a camera bearing and compares the angle to a threshold angle (e.g., 90 degrees). If the angle satisfies the threshold angle (e.g., the angle is less than or equal to 90 degrees), the 3-point triangulation module 207 includes the 3D coordinates as a part of the 3-point triangulation result 215. Conversely, if the angle fails to satisfy the threshold angle (e.g., the angle is greater than 90 degrees), the 3-point triangulation module 207 excludes the 3D coordinates as a part of the 3-point triangulation result 215.

For triangulation results that are too close to the camera, such results cannot be easily addressed by the aforementioned filtering processes, since many correct triangulation results can be very close to the camera. To address triangulation results that are too close to the camera, the 4-or-more-point triangulation module 209 may perform 4-or-more-point triangulation and additional noise-removal processes on the 3-point triangulation result 215.

The 4-or-more triangulation module 209 receives the 3-point triangulation result 215 and determines whether the 3-point triangulation result 215 indicates at least one input point (i.e., at least one of the plurality of objects detected from the images 203) that is used for performing the 3-point triangulation and one or more additional 3-point triangulations. If the 3-point triangulation result 215 indicates that the at least one input point is used for performing the 3-point triangulation and the one or more additional 3-point triangulations, the 4-or-more-point triangulation module 209 merges the 3-point triangulation result 215 and one or more additional 3-point triangulation results from the one or more additional 3-point triangulations to form correspondences with 4 or more points. Then, the 4-or-more-point triangulation module 209 performs the 4-or-more-point triangulation on the 4 or more points to generate a 4-or-more-point triangulation result 217. The 4-or-more-point triangulation is a method used in navigation to determine an unknown position using four or more known reference points. The 4-or-more-point triangulation measures distances or angles between the 4 or more points and uses the information to precisely locate an unknown position. In one embodiment, similar to the one or more noise removal processes performed by the 3-point triangulation module 207, the 4-or-more-point triangulation module 209 may perform one or more noise removal processes, such as reprojection error filtering, distance filtering, and camera bearing filtering, on the 4-or-more-point triangulation result 217 to remove incorrect triangulation results. If the 3-point triangulation result 215 indicates that each input point thereof (i.e., each object used for deriving the 3-point triangulation result 215) is only used once, the 3-point triangulation result 215 is simply passed on to the clustering model 213 as a final 3-point triangulation result 219.

The 2-point triangulation module 211 performs 2-point triangulation to generate a triangulation result 223. In FIG. 2, the 2-point triangulation module 211 receives the 3-point triangulation result 215, the 4-or-more-point triangulation result 217, unused detection data 221 to generate the triangulation result 223. The unused detection data 221 may indicate one or more objects among the plurality of objects from the detection result 205 that is not used for producing any triangulation result. In one embodiment, the 2-point triangulation module 211 uses the 3-point triangulation result 215, 4-or-more-point triangulation 217, or a combination thereof and unused detection data 221 to identify a subset of images among the images 203, where the subset of images includes: (i) a first subset of the plurality of objects that is used for producing the 3-point triangulation result, the 4-or-more-point triangulation result, or a combination thereof; and (ii) a second subset of the plurality of objects indicating the unused detection data 221. In such embodiment, the 2-point triangulation module 211 uses a plurality of points of the first subset to estimate a homography matrix for mapping points on the same plane as the first subset from a first image of the subset of images to a second image of the subset of images. A homography matrix is a transformation matrix that represents a projective transformation between two planes. A homography matrix may be used in computer vision and image processing to map points from one image to another when the images are related by a perspective transformation. In one embodiment, the plurality of points indicates corner points of the first subset. In an alternative embodiment, the plurality of points indicates center points of the first subset.

Once the homography matrix is determined, 2-point triangulation module 211 applies the homography matrix to project a point of a first object (e.g., a center point of a bounding box) of the second subset in the first image to the second image to determine whether the point falls within a second object of the second subset in the second image. If the point falls within the second object, the 2-point triangulation module 211 provides a 2-point triangulation result to indicate that the first object and the second object of the second subset are matched for establishing correspondence. Conversely, if the point does not fall within the second object, the 2-point triangulation module 211 provides the 2-point triangulation result to indicate that the first object and the second object of the second subset are not matched for establishing correspondence.

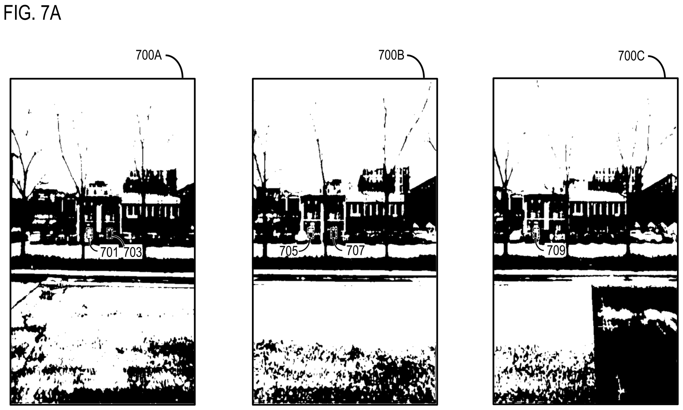

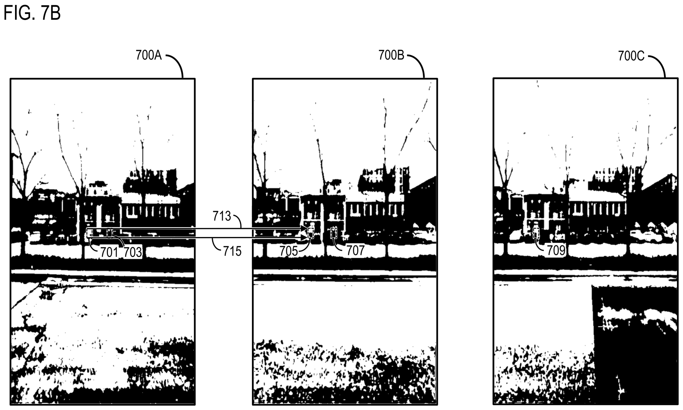

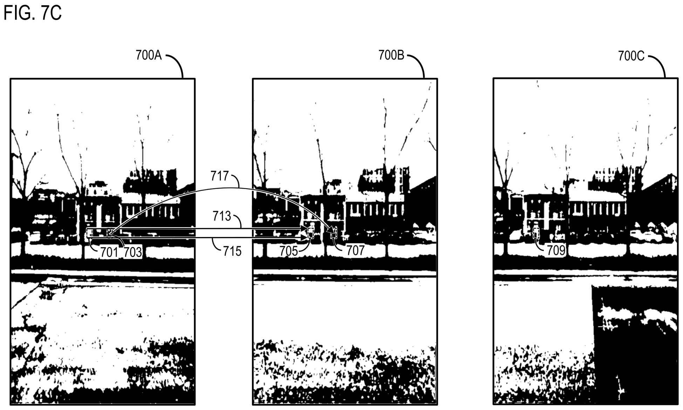

For example, FIGS. 7A-7C illustrate examples of providing 2-point triangulation on a set of images 700A, 700B, and 700C, according to an embodiment. In the illustrated embodiments, the set of images 700A, 700B, and 700C are chronologically consecutive images. The first image 700A includes a first object 701 and a second object 703, the second image 700B includes a third object 705 and a fourth object 707, and the third image 700C includes a fifth object 709. Each of the first object 701, the second object 703, the third object 705, the fourth object 707, and the fifth object 709 is a bounding box indicating detection of a building accessor. The first object 701, the third object 705, and the fifth object 709 are used for producing the 3-point triangulation result, the 4-or-more-point triangulation result, or a combination thereof, and the second object 703 and the fourth object 707 are not used for producing any triangulation result. In FIG. 7B, corner points of the first object 701 and the second object 703 are used to estimate a homography matrix for mapping points on the same plane as the first object 701 and the second object 703 from the first image 700A to the second image 700B. In the illustrated embodiment, first and second lines 713 and 715 indicate lines connecting the mapped points. In FIG. 7C, the homography matrix is applied to project a center point of the second object 703 in the first image 700A to the second image 700B to determine whether the center point falls within the fourth object 707 in the second image 700B. In the illustrated embodiment, a third line 717 indicates the projection of the center point of the second object 703 in the first image 700A to the second image 700B. Since the center point falls within the fourth object 707, a 2-point triangulation result is provided to indicate that second object 703 and the fourth object 707 are matched for establishing correspondence.

In one embodiment, 2-point triangulation module 211 determines whether any 2-point correspondences from the 2-point triangulation result can be consolidated into 3-or-more point correspondences based on whether any objects appeared in multiple two-point correspondences. Specifically, the 2-point triangulation module 211 determines whether the 2-point triangulation result indicates at least one input point (i.e., at least one of the plurality of objects from the images 203) that is used for performing the 2-point triangulation and one or more additional 2-point triangulations. If the 2-point triangulation result indicates that the at least one input point is used for performing the 2-point triangulation and the one or more additional 2-point triangulations, the 2-point triangulation module 211 merges the 2-point triangulation result 223 and one or more additional 2-point triangulation results from the one or more additional 2-point triangulations to form correspondences with 3 or more points. Then, the 2-point triangulation module 211 performs 3-or-more-point triangulation on the 3 or more points to generate a 3-or-more point triangulation result. The 3-or-more-point triangulation is a method used in navigation to determine an unknown position using three or more known reference points. The 3-or-more-point triangulation measures distances or angles between the 3 or more points and uses the information to precisely locate an unknown position. Subsequently, the 3-or-more point triangulation module 211 provides the 3-or-more-point triangulation result as a part of the triangulation result 223. Conversely, if the 2-point triangulation result indicates that each input point thereof (i.e., each object used for deriving the 2-point triangulation result) is only used once, the 2-point triangulation result is provided as a part of the triangulation result 223.

In one embodiment, prior to providing the triangulation result 223 to the clustering model 213, the 3-or-more point triangulation result, the 2-point triangulation result, or a combination thereof may be subject to one or more noise removal processes. Similar to the one or more noise removal processes performed by the 3 point triangulation module 207 and the 4-or-more-point triangulation module 209, the 2-point triangulation module 211 may perform reprojection error filtering, distance filtering, camera bearing filtering, or a combination thereof on the 3-or-more point triangulation result, the 2-point triangulation result, or the combination thereof to remove incorrect triangulation results.

The consolidation module 115 recieves the 4-or-more-point triangulation result 217, the final 3-point triangulation result 219, and the triangulation result 223, and the clustering model 213 of the consolidation module 115 consolidates the results and outputs the consolidated localization result 103. In one embodiment, the clustering model 213 may be a Density-Based Spatial Clustering of Applications with Noise (DBSCAN) clustering algorithm. DBSCAN may group together points that are close to each other based on a density criterion while marking points in low-density regions as outliers. DBSCAN may identify clusters based on regions of high point density, making the algorithm effective for discovering clusters of arbitrary shapes. In such embodiment, the epsilon parameter may be set at, for example, 3 meters, and the set minimum points parameter may be set at, for example, 2. In one embodiment, to consolidate points based on distance in meters, the coordinates of the consolidated localization result 103 may be converted from longitude and latitude to Universal Transverse Mercator (UTM) coordinates. In one embodiment, the final consolidated results included in the consolidated localization result 103 include both cluster centers and singletons. In alternative embodiments, the clustering model 213 may be a K-means clustering algorithm, a mean shift clustering algorithm, or any equivalent machine learning model used as an implementation of a clustering algorithm or model.

In one embodiment, the consolidated localization result 103 may be provided to a map database (e.g., database 123) to update attributes of map features. As such, service/content providers (e.g., services platform 125 and content providers 127) that rely on the map database may utilize the updated map features to improve the quality of navigation and location-based services. For example, a system that provides path planning and route optimization may use the consolidated localization result 103 for determining the current position of a vehicle or user. By knowing the exact location, the system can compute the optimal route to a destination based on various factors such as traffic conditions, road constraints, and user preferences. Additionally, such system can compute detailed routes that incorporate pathways designated for non-vehicles, such as sidewalks and alleyways, thereby providing advanced navigation services to users. By way of another example, a system that provides real-time position tracking may use the consolidated localization result 103 for tracing a moving entity. Such function is crucial in various applications such as autonomous vehicles, robotics, and pedestrian navigation, where real-time position updates are required to make dynamic decisions. By way of another example, a system that provides navigation assistance and guidance may utilize the consolidated localization result 103 to enable step-by-step navigation instructions by determining the user's position relative to map features, waypoints, or POIs. Such feature is particularly useful in turn-by-turn navigation systems used in GPS applications for vehicles and mobile devices. By way of another example, systems that provide obstacle avoidance and collision prevention, which are prevalent in autonomous systems and assisted navigation technologies, may use the localization results 103 to detect and avoid obstacles. By mapping real-time location data to known surroundings, the systems can predict possible collisions and take corrective actions. By way of another example, a system that provides context-aware services may utilize the localization results 103 to provide context-aware recommendations. For instance, location data can trigger notifications about nearby fuel stations, restaurants, or landmarks, enhancing the user experience. By way of another example, a system that provides geofencing and access control may rely on the localization results 103 to create virtual boundaries, triggering actions when a user enters or exits a specific area. Such feature is utilized in fleet management, asset tracking, and location-based security applications. By way of another example, a system that provides multi-sensor fusion for robust navigation may fuse the localization results 103 and data obtained from various sensors (GPS, LiDAR, IMU, visual odometry) to improve navigation accuracy. Such feature is particularly critical in environments where GPS signals may be weak or unavailable, such as indoor or underground spaces. By way of another example, a system that provides ride sharing may utilize the localization results 103 to improve path planning and optimize planning for patron pick-up and drop offs locations.

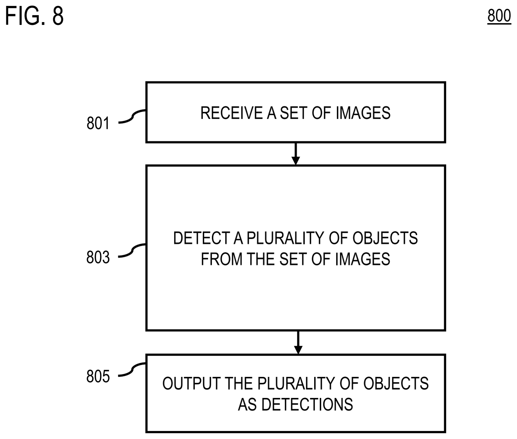

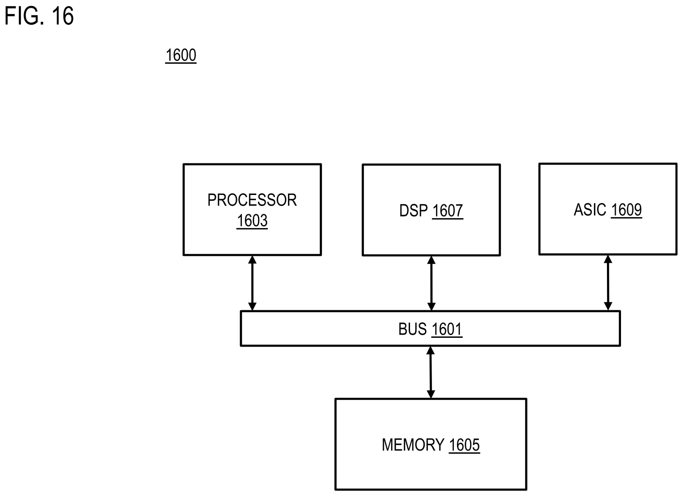

FIG. 8 illustrates a flowchart of a process 800 for detecting a plurality of objects from a set of images, according to an embodiment. In various embodiments, the localization platform 110 may perform one or more portions of the process 800 and may be implemented in, for instance, a chip set including a processor and a memory as shown in FIG. 16. As such, the localization platform 110 can provide means for accomplishing various parts of the process 800, as well as means for accomplishing embodiments of other processes described herein in conjunction with other components of the system 100. Although the process 800 is illustrated and described as a sequence of steps, it is contemplated that various embodiments of the process 800 may be performed in any order or combination and need not include all of the illustrated steps. The process 800 will be described in view of FIGS. 1 and 2.

In step 801, the 2D object detection module 201 receives a set of images, such as the images 203 or the sensor data 101 from the sensors 121 of the detection entity 120. In one embodiment, the set of images may indicate an environment of the detection entity 120. In one embodiment, the set of images may be captured while the detection entity 120 is in motion. In one embodiment, the set of images may indicate chronologically consecutive images.

In step 803, the 2D object detection module 201 detects a plurality of objects from the set of images. In one embodiment, the 2D object detection module 201 detects a plurality of objects from the images 203 to yield a detection result 205. In one embodiment, the 2D object detection model 201 may be a deep learning architecture, such as YOLOv7, YOLOv8, YOLOv9, Faster R-CNN, EfficientDet, or any equivalent machine learning model. The plurality of objects may be bounding boxes, where the bounding boxes represent objects of interest within the images 203, such as locations of POIs and map features such as building accessors, storefronts, signs, traffic signals, etc. In one embodiment, the plurality of objects may indicate a center point for each of the bounding boxes.

In step 805, the 2D object detection module 201 outputs the plurality of objects as a part of the detection result 205. The plurality of objects may be used by the localization module 113 for performing multiple localization processes.

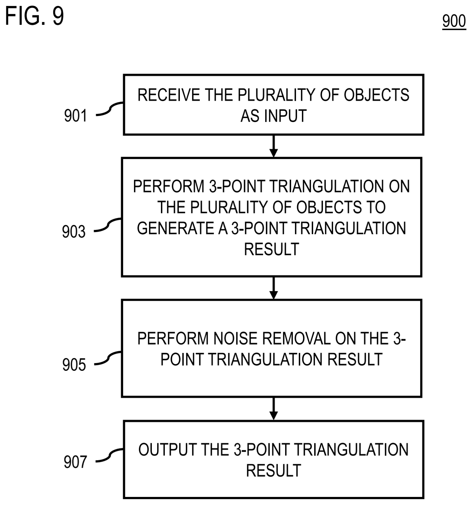

FIG. 9 illustrates a flowchart of a process 900 for performing 3-point triangulation, according to an embodiment. In various embodiments, the localization platform 110 may perform one or more portions of the process 900 and may be implemented in, for instance, a chip set including a processor and a memory as shown in FIG. 16. As such, the localization platform 110 can provide means for accomplishing various parts of the process 900, as well as means for accomplishing embodiments of other processes described herein in conjunction with other components of the system 100. Although the process 900 is illustrated and described as a sequence of steps, it is contemplated that various embodiments of the process 900 may be performed in any order or combination and need not include all of the illustrated steps. The process 900 will be described in view of FIGS. 1 and 2.

In step 901, the 3-point triangulation module 207 of the localization module 113 receives the detection result 205, and the plurality of objects from the detection result 205 is provided to the 3-point triangulation module 207 as input for 3-point triangulation.

In step 903, the 3-point triangulation module 207 performs the 3-point triangulation on the plurality of objects to generate the 3-point triangulation result 215. In one embodiment, the 3-point triangulation module 207 may perform the 3-point triangulation by converting the center points of the bounding boxes into geographic locations in latitude, longitude, and altitude.

In one embodiment, the 3-point triangulation module 207 may selectively perform the 3-point triangulation on certain combinations of the plurality of objects to generate the 3-point triangulation result 215. A combination indicates only one of the plurality of objects for each of the images 203. To reduce computational burden on a system implementing the 3-point triangulation module 207, the 3-point triangulation module 207 may filter combinations of the plurality of objects based on consistency of the plurality of objects with a direction of motion of the images 203. To determine the consistency, the 3-point triangulation module 207 may determine the direction of motion of the images 203. Then, a set of the plurality of objects for each combination is compared against the direction of motion of the images 203. If the images 203 indicate that the set of the plurality of objects for a combination progressively moves in a direction opposing the direction of motion, the combination is selected, and the 3-point triangulation is performed on the selected combination.

In step 905, the 3-point triangulation module 207 performs one or more noise removal processes on the 3-point triangulation result 215. In one embodiment, the noise removal processes include reprojection error filtering, distance filtering, and camera bearing filtering.

For the reprojection error filtering, 3D coordinates generated by the 3-point triangulation are projected back into 2D points on the images 203 to yield re-projection error. If a projected 2D point deviates horizontally by more than a threshold value (e.g., 15%) of the detection bounding box width or vertically by more than a threshold value (e.g., 15%) of the detection bounding box height, the reprojection error would be considered too large, and the 3D coordinates are excluded as a part of the 3-point triangulation result 215; however, if the deviations of the projected 2D point is equal to or less than the threshold values, the 3D coordinates are included as a part of the 3-point triangulation result 215.

For distance filtering, the 3-point triangulation module 207 determines a distance between the image capture sensor that captured the images 203 and the 3D coordinates derived from the 3-point triangulation. Then, the 3-point triangulation 207 compares the distance to a threshold distance (e.g., 40 meters), and if the distance satisfies the threshold distance (e.g., the distance is equal to or less than 40 meters), the 3-point triangulation 207 includes the 3D coordinates as a part of the 3-point triangulation result 215. Conversely, if the distance does not satisfy the threshold distance (e.g., the distance is greater than 40 meters), the 3-point triangulation 207 excludes the 3D coordinates as a part of the 3-point triangulation result 215.

For the camera bearing filtering, the 3-point triangulation module 207 determines a direction from the image capture sensor that captured the images 203 to the 3D coordinates. Then, the 3-point triangulation module 207 determines an angle of the direction to a camera bearing and compares the angle to a threshold angle (e.g., 90 degrees). If the angle satisfying the threshold angle (e.g., the angle is less than or equal to 90 degrees), the 3-point triangulation module 207 includes the 3D coordinates as a part of the 3-point triangulation result 215. Conversely, if the angle fails to satisfy the threshold angle (e.g., the angle is greater than 90 degrees), the 3-point triangulation module 207 excludes the 3D coordinates as a part of the 3-point triangulation result 215.

In step 907, the 3-point triangulation module 207 outputs the 3-point triangulation result 215. The 3-point triangulation result 215 may be provided to the 4-or-more-point triangulation module 209 and the 2-point triangulation module 211.

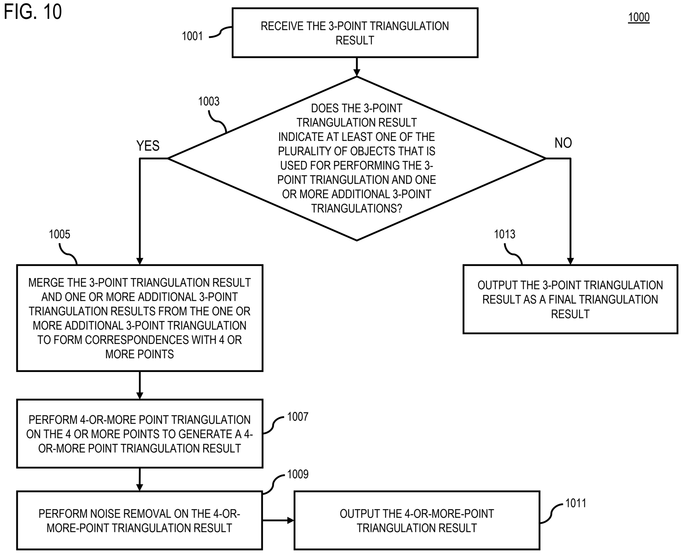

FIG. 10 illustrates a flowchart of a process 1000 for providing 4-or-more-point triangulation, according to an embodiment. In various embodiments, the localization platform 110 may perform one or more portions of the process 1000 and may be implemented in, for instance, a chip set including a processor and a memory as shown in FIG. 16. As such, the localization platform 110 can provide means for accomplishing various parts of the process 1000, as well as means for accomplishing embodiments of other processes described herein in conjunction with other components of the system 100. Although the process 1000 is illustrated and described as a sequence of steps, it is contemplated that various embodiments of the process 1000 may be performed in any order or combination and need not include all of the illustrated steps. The process 1000 will be described in view of FIGS. 1 and 2.

In step 1001, the 4-or-more-point triangulation module 209 of the localization module 113 receives the 3-point triangulation result 215.

In step 1003, the 4-or-more triangulation module 209 determines whether the 3-point triangulation result 215 indicates at least one of the plurality of objects detected from the images 203 that is used for performing the 3-point triangulation and one or more additional 3-point triangulations. If the 3-point triangulation result 215 indicates that at least one of the plurality of objects is used for performing the 3-point triangulation and one or more additional 3-point triangulations, the process 1000 continues to step 1005. If the 3-point triangulation result 215 indicates that none of the plurality of objects is used for performing the 3-point triangulation and one or more additional 3-point triangulations, the process continues to step 1013.

In step 1005, the 4-or-more-point triangulation module 209 merges the 3-point triangulation result 215 and one or more additional 3-point triangulation results from the one or more additional 3-point triangulations to form correspondences with 4 or more points.

In step 1007, the 4-or-more-point triangulation module 209 performs the 4-or-more-point triangulation on the 4 or more points to generate a 4-or-more-point triangulation result 217. The 4-or-more-point triangulation is a method used in navigation to determine an unknown position using four or more known reference points. The 4-or-more-point triangulation measures distances or angles between the 4 or more points and uses the information to precisely locate an unknown position.

In step 1009, the 4-or-more-point triangulation module 209 performs one or more noise removal processes, such as reprojection error filtering, distance filtering, and camera bearing filtering, on the 4-or-more-point triangulation result 217 to remove incorrect triangulation results. In one embodiment, the noise removal processes performed in step 1011 may be similar to the noise removal processes performed in step 905 of FIG. 9.

In step 1011, the 4-or-more-point triangulation module 209 outputs the 4-or-more-point triangulation result 217, and the 4-or-more-point triangulation result 217 may be provided to the 2-point triangulation module 211 and the clustering model 213.

In step 1013, the 4-or-more-point triangulation module 209 outputs the 3-point triangulation result 215, and the 3-point triangulation result 215 is simply passed on to the clustering model 213 as the final 3-point triangulation result 219.

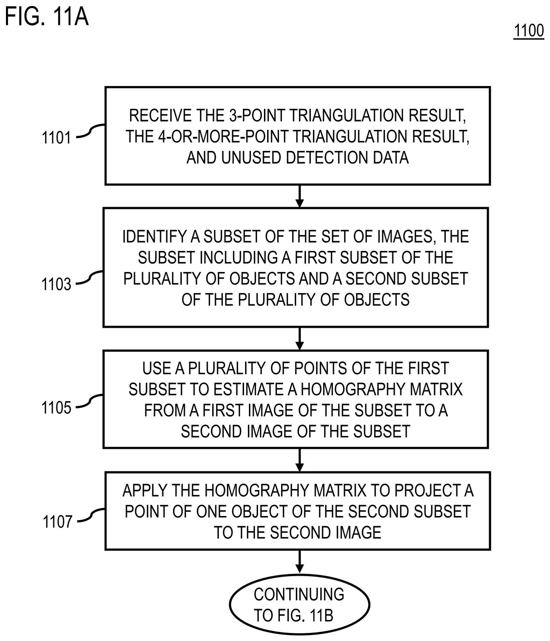

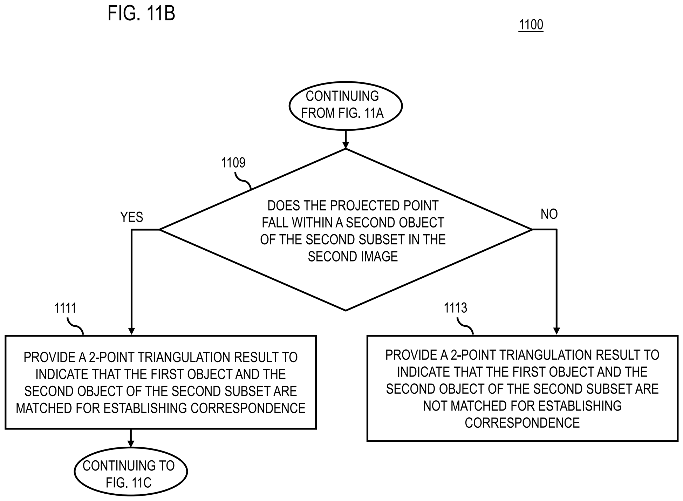

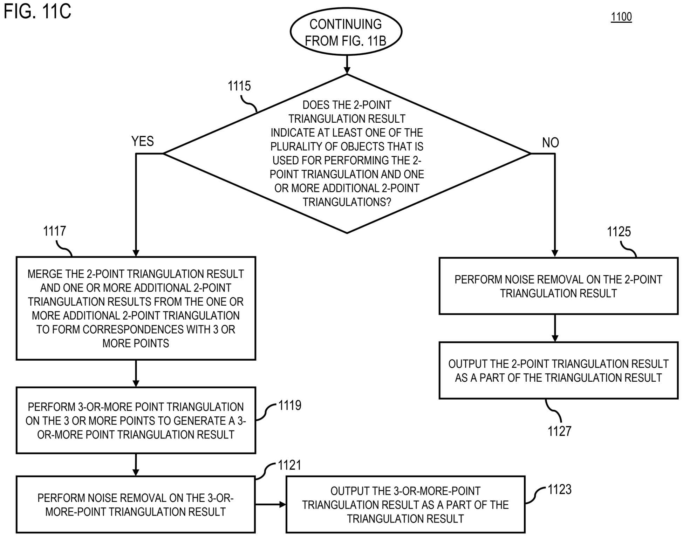

FIGS. 11A, 11B, and 11C illustrate a flowchart of a process 1100 for providing 2-or-more-point triangulation, according to an embodiment. In various embodiments, the localization platform 110 may perform one or more portions of the process 1100 and may be implemented in, for instance, a chip set including a processor and a memory as shown in FIG. 16. As such, the localization platform 110 can provide means for accomplishing various parts of the process 1100, as well as means for accomplishing embodiments of other processes described herein in conjunction with other components of the system 100. Although the process 1100 is illustrated and described as a sequence of steps, it is contemplated that various embodiments of the process 1100 may be performed in any order or combination and need not include all of the illustrated steps. The process 1100 will be described in view of FIGS. 1 and 2.

In step 1101, the 2-or-more-point triangulation module 211 of the localization module 113 receives the 3-point triangulation result 215, the 4-or-more-point triangulation result 217, and the unused detection data 221. The unused detection data 221 may indicate one or more objects among the plurality of objects from the detection result 205 that is not used for producing any triangulation result.

In step 1103, the 2-point triangulation module 211 uses the 3-point triangulation result 215, 4-or-more-point triangulation 217, or a combination thereof and the unused detection data 221 to identify a subset of images among the images 203, where the subset of images includes: (i) a first subset of the plurality of objects that is used for producing the 3-point triangulation result, the 4-or-more-point triangulation result, or a combination thereof; and (ii) a second subset of the plurality of objects indicating the unused detection data 221.

In step 1105, the 2-point triangulation module 211 uses a plurality of points of the first subset to estimate a homography matrix for mapping points on the same plane as the first subset from a first image of the subset of images to a second image of the subset of images. A homography matrix is a transformation matrix that represents a projective transformation between two planes. A homography matrix may be used in computer vision and image processing to map points from one image to another when the images are related by a perspective transformation. In one embodiment, the plurality of points indicates corner points of the first subset. In an alternative embodiment, the plurality of points indicates center points of the first subset.

In step 1107, the 2-point triangulation module 211 applies the homography matrix to project a point of a first object (e.g., a center point of a bounding box) of the second subset in the first image to the second image.

In step 1109, the 2-point triangulation module 211 determines whether the projected point falls within a second object of the second subset in the second image. If the projected point falls within the second object, the process 1100 continues to step 1111. Otherwise, the process 1100 continues to step 1113.

In step 1111, the 2-point triangulation module 211 provides a 2-point triangulation result to indicate that the first object and the second object of the second subset are matched for establishing correspondence.

In step 1113, the 2-point triangulation module 211 provides a 2-point triangulation result to indicate that the first object and the second object of the second subset are not matched for establishing correspondence.

In step 1115, the 2-point triangulation module 211 determines whether the 2-point triangulation result indicates at least one of the plurality of objects from the images 203 that is used for performing the 2-point triangulation and one or more additional 2-point triangulations. If the 2-point triangulation result indicates that the at least one of the plurality of objects is used for performing the 2-point triangulation and the one or more additional 2-point triangulations, the process 1100 continues to step 1117. If the 2-point triangulation result indicates that none of the plurality of objects is used for performing the 2-point triangulation and the one or more additional 2-point triangulations, the process 1100 continues to step 1125.

In step 1117, the 2-point triangulation module 211 merges the 2-point triangulation result 223 and one or more additional 2-point triangulation results from the one or more additional 2-point triangulations to form correspondences with 3 or more points.

In step 1119, the 2-point triangulation module 211 performs 3-or-more-point triangulation on the 3 or more points to generate a 3-or-more point triangulation result.

In step 1121, the 2-point triangulation module 211 performs one or more noise removal processes, such as reprojection error filtering, distance filtering, camera bearing filtering, on the 3-or-more point triangulation result. In one embodiment, the one or more noise removal processes performed in step 1121 may be similar to the one or more noise removal processes performed in steps 905 and 1009.

In step 1123, the 2-point triangulation module 211 outputs the 3-or-more-point triangulation result as a part of the triangulation result 223.

In step 1125, the 2-point triangulation module 211 performs one or more noise removal processes, such as reprojection error filtering, distance filtering, camera bearing filtering, on the 2 point triangulation result. In one embodiment, the one or more noise removal processes performed in step 1125 may be similar to the one or more noise removal processes performed in steps 905 and 1009.

In step 1127, the 2-point triangulation module 211 outputs the 2-point triangulation result as a part of the triangulation result 223.

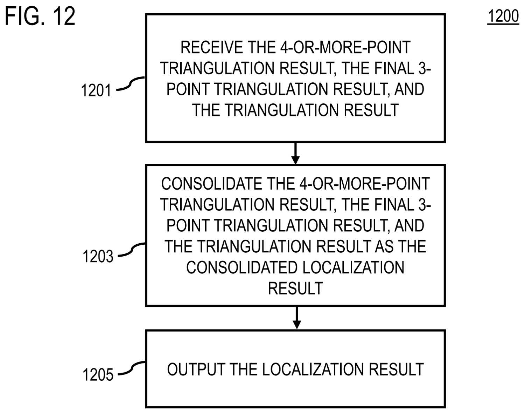

FIG. 12 illustrates a flowchart of a process 1200 for consolidating the 4-or-more-point triangulation result 217, the final 3-point triangulation result 219, and the triangulation result 223 as the consolidated localization result 103, according to an embodiment. In various embodiments, the localization platform 110 may perform one or more portions of the process 1200 and may be implemented in, for instance, a chip set including a processor and a memory as shown in FIG. 16. As such, the localization platform 110 can provide means for accomplishing various parts of the process 1200, as well as means for accomplishing embodiments of other processes described herein in conjunction with other components of the system 100. Although the process 1200 is illustrated and described as a sequence of steps, it is contemplated that various embodiments of the process 1200 may be performed in any order or combination and need not include all of the illustrated steps. The process 1200 will be described in view of FIGS. 1 and 2.

In step 1201, the clustering model 213 of the consolidation module 115 recieves the 4- or-more-point triangulation result 217, the final 3-point triangulation result 219, and the triangulation result 223.

In step 1203, the clustering model 213 consolidates the 4-or-more-point triangulation result 217, the final 3-point triangulation result 219, and the triangulation result 223 as the consolidated localization result 103. In one embodiment, the clustering model 213 may be a Density-Based Spatial Clustering of Applications with Noise (DBSCAN) clustering algorithm. In such embodiment, the epsilon parameter may be set at, for example, 3 meters, and the set minimum points parameter may be set at, for example, 2. In one embodiment, to consolidate points based on distance in meters, the coordinates of the consolidated localization result 103 may be converted from longitude and latitude to Universal Transverse Mercator (UTM) coordinates. In one embodiment, the final consolidated results included in the consolidated localization result 103 include both cluster centers and singletons. In alternative embodiments, the clustering model 213 may be a K-means clustering algorithm, a mean shift clustering algorithm, or any equivalent machine learning model used as an implementation of a clustering algorithm or model.

In step 1205, the clustering model 213 outputs the consolidated localization result 103. In one embodiment, the consolidated localization result 103 may be provided to a map database (e.g., the database 123) to update attributes of map features. As such, service/content providers (e.g., services platform 127 and content providers 125) that rely on the map database may utilize the updated map features to improve the quality of navigation and location-based services.

Returning to FIG. 1, the localization platform 110 has connectivity or access to the database 123 for storing the consolidated localization result 103 determined according to the various embodiments described herein. The database 123 may be utilized by various entities, such as the content providers 125 and the services platform 127, for retrieving mapping data and/or related attributes for providing various navigation and location-based services. In one embodiment, the database 123 can include electronic or digital representations of map features associated with the consolidated localization result 103. In the illustrated embodiment, the localization platform 110 and the database 123 have connectivity to other components of the system 100 via a communication network 129.

In the illustrated embodiment, a user equipment (UE) 131 has connectivity to the localization platform 110 via the communication network 129. The UE 131 may be any type of mobile terminal or fixed terminal such as a mobile handset, station, unit, device, multimedia computer, multimedia tablet, Internet node, communicator, cellular telephone, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, devices associated with or integrated with a vehicle (e.g., as part of an infotainment system), or any combination thereof, including the accessories and peripherals of these devices. In one embodiment, the UE 131 can be an in-vehicle navigation system, a personal navigation device (PND), a portable navigation device, a cellular telephone, a mobile phone, a personal digital assistant (PDA), a watch, a camera, a computer, and/or other device that can perform navigation-related functions, such as digital routing and map display. In one embodiment, the UE 131 may support any type of interface to the user (such as "wearable" devices, etc.).

In the illustrated embodiment, an application 133 may be executable by the UE 131 to provide one or more services that utilize the localization results 103, such as real-time position tracking, navigation assistance and guidance, obstacle avoidance and collision prevention, context-aware services, geofencing and access control, multi-sensor fusion for robust navigation, ride sharing applications, etc. For example, the application 133 may be utilized to facilitate any facet of the one or more services that require user interaction (e.g., receiving user inputs or providing prompts and information).

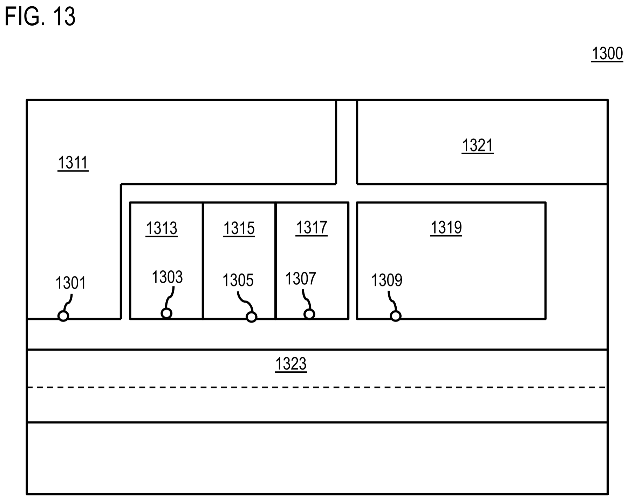

In one embodiment, the application 133 may cause user interface of the UE 113 to present the consolidated localization result 103 to indicate locations of map features. For example, FIG. 13 illustrates a diagram of a user interface 1300 showing a plan view of a geographical area and localization results 1301, 1303, 1305, 1307, and 1309 of map features, according to an embodiment. In the illustrated embodiment, the geographical area includes buildings 1311, 1313, 1315, 1317, 1319, and 1321 and a road 1323. The localization results 1301, 1303, 1305, 1307, and 1309 are marked on the user interface 1300 to clearly indicate estimated locations of the map features, such as building accessors of the buildings 1311, 1313, 1315, 1317 and 1319.

In one embodiment, the application 133 may be other applications executable by the UE 113, such as a mapping application, a location-based service application, a navigation application, a content provisioning service, a camera/imaging application, a media player application, a social networking application, a calendar application, or any combination thereof. In one embodiment, the application 133 may act as clients for the localization platform 110 and perform one or more functions associated with the functions of the localization platform 110 by interacting with the localization platform 110 over the communication network 129.

As discussed in the previous embodiments, the detection entity 120 may be a vehicle equipped with the sensors 121, such as image capturing sensors. The detection entity 120 may acquire the sensor data 101 using the sensors 121, and the sensor data 101 may include the images 203 and the sensor information 225. In one embodiment, the sensors 121 may be electronic imaging devices of both analog and digital types, which include digital cameras, camera modules, camera phones, thermal imaging devices, radar, sonar, lidar, etc. In one embodiment, the detection entity 120 may further include a network detection sensor for detecting wireless signals or receivers for different short-range communications (e.g., Bluetooth, Wi-Fi, Li-Fi, near field communication (NFC), etc.), temporal information sensors, an audio recorder for gathering audio data, velocity sensors, light sensors, oriental sensors augmented with height sensor and acceleration sensor, tilt sensors to detect the degree of incline or decline of a detection entity 120 along a path of travel, etc. In one embodiment, the sensors 121 may include one or more sensors disposed around the perimeter of a detection entity 120, and said one or more sensors may detect the relative distance of the detection entity 120 from map features, road objects, lanes, or roadways, the presence of other vehicles, pedestrians, traffic lights, road features (e.g., curves) and any other objects, or a combination thereof. In one embodiment, the sensors 121 may also detect orientations of objects. In one embodiment, the detection entity 120 may include GPS receivers to obtain geographic coordinates from satellites for determining the current location of the detection entity 120. In one embodiment, the detection entities 117 may further include receivers/transmitters for maintaining communication with the localization platform 110 and/or other components within the system 100 via the communication network 129.

In one embodiment, content providers 125 may provide content or data to the localization platform 110, the database 123, the services platform 127, the UE 131, or a combination thereof. The content provided may also include any type of content, lane level road topology data, sensor data, map content, textual content, audio content, video content, image content, etc. In one embodiment, the content providers 125 may also store content associated with the localization platform 110, the database 123, the services platform 127, the UE 131, or a combination thereof. In one embodiment, the content providers 125 may manage access to a central repository of data, and offer a consistent, standard interface to data, such as a repository of the database 123.

In one embodiment, the localization platform 110 has connectivity over the communication network 129 to the services platform 127 that provides one or more services 135a-135n (collectively referred as services 135). In one embodiment, the services 135 may be third-party services that rely on location-based services created or developed based on the consolidated localization result 103 generated according to the various embodiments described herein. By way of example, the services 131 include, but are not limited to, real-time position tracking, navigation assistance and guidance, obstacle avoidance and collision prevention, context-aware services, geofencing and access control, multi-sensor fusion for robust navigation, ride sharing applications, autonomous/semi-autonomous vehicle operation, mapping services, travel planning services, notification services, social networking services, content (e.g., audio, video, images, etc.) provisioning services, application services, storage services, contextual information determination services, location-based services, information-based services (e.g., weather, news, etc.), etc.

In one embodiment, the communication network 129 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), 5G New Radio Networks, Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

In one embodiment, the localization platform 110, UE 131, services platform 127, and/or content providers 125 optionally communicate with each other and other components of the system 100 using well known, new or still developing protocols. In this context, a protocol includes a set of rules defining how the network nodes within the communication network 129 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a datalink (layer 2) header, an internetwork (layer 3) header and a transport (layer 4) header, and various application (layer 5, layer 6 and layer 7) headers as defined by the OSI Reference Model.

While the illustrated embodiment shows that each of the components within the system 100 is labeled as an individual entity, it should be appreciated that one or more of the components within the system 100 may be combined and/or excluded from the system 100. For example, in an alternative embodiment, the localization platform 110 may be incorporated into one or more components within the system 100 (e.g., the content providers 125, the services platform 127, or the UE 131). In an alternative embodiment, the localization platform 110 may be incorporated into a vehicle as a vehicle component and perform localization based on sensor data acquired by one or more sensors equipped by the vehicle.

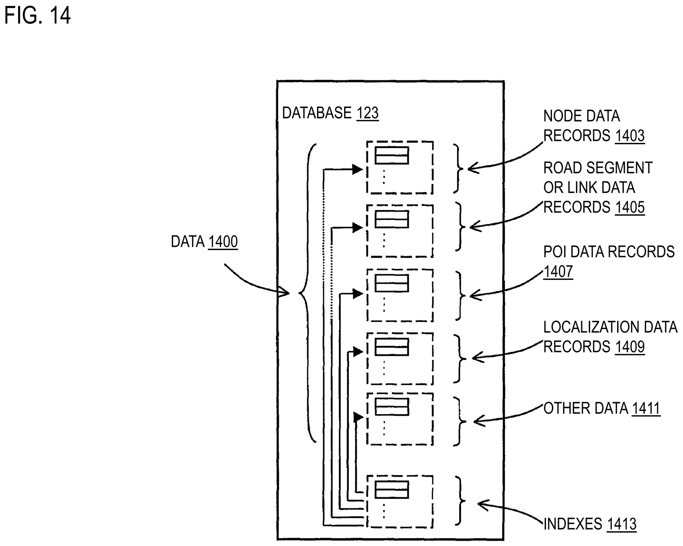

FIG. 14 is a diagram of the database 123, according to an embodiment. In one embodiment, the database 123 includes data 1400 used for (or configured to be compiled to be used for) mapping and/or navigation-related services. In one embodiment, the database 123 includes geographic features (e.g., two-dimensional or three-dimensional features) represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the database 123.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the database 123 follows certain conventions. For example, links do not cross themselves and do not cross each other except at a node. Also, there are no duplicated shape points, nodes, or links. Two links that connect each other have a common node. In the database 123, overlapping geographic features are represented by overlapping polygons. When polygons overlap, the boundary of one polygon crosses the boundary of the other polygon. In the database 123, the location at which the boundary of one polygon intersects the boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the database 123 includes node data records 1403, road segment or link data records 1405, POI data records 1407, localization data records 1409, other data 1411, and indexes 1413, for example. More, fewer, or different data records can be provided. In one embodiment, additional data records (not shown) can include cartographic ("carto") data records, routing data, and maneuver data. In one embodiment, the indexes 1413 may improve the speed of data retrieval operations in the database 123. In one embodiment, the indexes 1413 may be used to quickly locate data without having to search every row in the database 123 every time it is accessed. For example, in one embodiment, the indexes 1413 can be a spatial index of the polygon points associated with stored feature polygons.

In exemplary embodiments, the road segment or link data records 1405 are links or segments representing roads, streets, or paths, as can be used in the calculated route or recorded route information for determination of one or more personalized routes. The node data records 1403 are end points (such as intersections) corresponding to the respective links or segments of the road segment or link data records 1405. The road segment or link data records 1405 and the node data records 1403 represent a road network, such as used by vehicles, cars, and/or other entities. Alternatively, the database 123 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The database 123 can include data about the POIs and their respective locations in the POI data records 1407. The database 123 can also include data about places, such as cities, towns, or other communities, and other geographic features, such as bodies of water, mountain ranges, etc. Such place or feature data can be part of the POI data records 1407 or can be associated with POIs or POI data records 1407 (such as a data point used for displaying or representing a position of a city).

In one embodiment, the database 123 can also include localization data records 1409 for storing the consolidated localization result 103. In one embodiment, the localization data records 1409 can be associated with one or more of the node records 1403, road segment records 1405, and/or POI data records 1407 to associate the localization data records 1409 with specific geographic locations. In this way, the localization data records 1409 can also be associated with the characteristics or metadata of the corresponding records 1403, 1405, and/or 1407.

In one embodiment, the database 123 can also include other data 1411 such as data related to the consolidated localization result 103. For example, the other data 1411 may include information regarding sensor data used for generating the consolidated localization result 103 (e.g., the sensor data 101), information on a source that acquired the sensor data (e.g., information about the detection entity 120), or a combination thereof.

In one embodiment, the database 123 can be maintained by the content providers 125 in association with the services platform 127 (e.g., a map developer). The map developer can collect geographic data to generate and enhance the database 123. There can be different ways used by the map developer to collect data. These ways can include obtaining data from other sources, such as municipalities or respective geographic authorities. In addition, the map developer can employ field personnel to travel by vehicle (e.g., vehicle) along roads throughout the geographic region to observe features and/or record information about them, for example. Also, remote sensing, such as aerial or satellite photography, can be used.

The database 123 can be a master geographic database stored in a format that facilitates updating, maintenance, and development. For example, the master geographic database or data in the master geographic database can be in an Oracle spatial format or other spatial format, such as for development or production purposes. Map layers may be utilized. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing localization through multiple triangulation processesmay be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular device, other network device, and/or other computing device.

The system, apparatus, and methods described herein provide steps for conducting localization that circumvent conventional steps of establishing correct correspondences by providing multiple triangulation processes, where each of the processes include performing triangulation on a candidate with unverified correspondences and implementing a noise removal process to remove incorrect results caused by incorrect correspondences. As such, systems utilizing such triangulation processes may produce results with high spatial accuracy and also remove noises in both input and output of each triangulation process to validate and enhance the results' spatial accuracy.

Additionally, systems utilizing the triangulation processes described herein do not require any key point detection and matching, or any object tracking, which are computationally costly. Therefore, such systems could increase computational speed for performing localization by several times compared to conventional methods that adopt key point detection and varying ways of object tracking.

Moreover, systems utilizing the triangulation processes described herein benefits from higher recall in comparison to systems employing conventional localization methods. Specifically, objects that are too small or lacking distinctive patterns, such as building accessors, are difficult for the traditional key point detection algorithms to find key points, which are required for later steps in triangulation-based localization method. Such deficiency could lead to a high false negative rate in the localization results. Since the triangulation processes in accordance with the embodiments described herein do not use key points, the processes use detections that would have been excluded due to lack of key points detected. With more detections used, there is a lower chance of producing false negatives in the localization results.

Therefore, the system, apparatus, and methods described herein provide a technological improvement in localization and computing systems that perform the same.

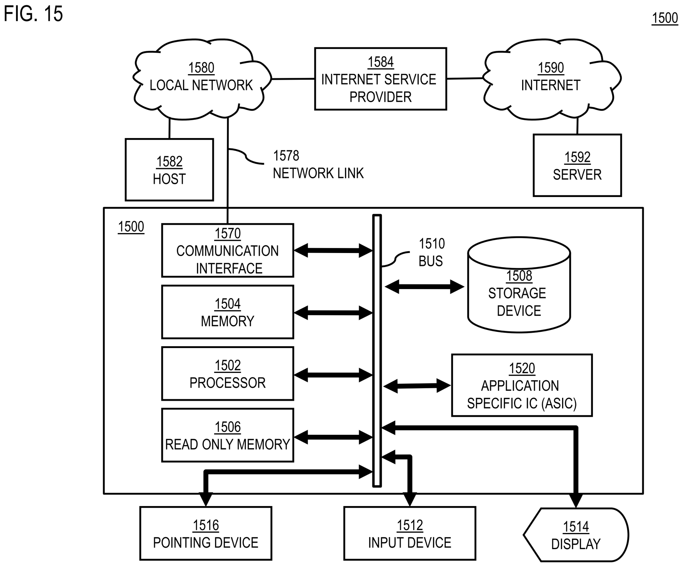

FIG. 15 illustrates a computer system 1500 upon which an embodiment of the invention may be implemented. Computer system 1500 is programmed (e.g., via computer program code or instructions) to provide localization through multiple triangulation processes as described herein and includes a communication mechanism such as a bus 1510 for passing information between other internal and external components of the computer system 1500. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1510 includes one or more parallel conductors of information so that information is transferred quickly among devices coupled to the bus 1510. One or more processors 1502 for processing information are coupled with the bus 1510.

A processor 1502 performs a set of operations on information as specified by computer program code related to providing localization through multiple triangulation processes. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1510 and placing information on the bus 1510. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1500 also includes a memory 1504 coupled to bus 1510. The memory 1504, such as a random access memory (RAM) or other dynamic storage device, stores information including processor instructions for providing localization through multiple triangulation processes. Dynamic memory allows information stored therein to be changed by the computer system 1500. RAM allows a unit of information stored at a location called a memory address to be stored and retrieved independently of information at neighboring addresses. The memory 1504 is also used by the processor 1502 to store temporary values during execution of processor instructions. The computer system 1500 also includes a read only memory (ROM) 1506 or other static storage device coupled to the bus 1510 for storing static information, including instructions, that is not changed by the computer system 1500. Some memory is composed of volatile storage that loses the information stored thereon when power is lost. Also coupled to bus 1510 is a non-volatile (persistent) storage device 1508, such as a magnetic disk, optical disk or flash card, for storing information, including instructions, that persists even when the computer system 1500 is turned off or otherwise loses power.

Information, including instructions for providing localization through multiple triangulation processes, are provided to the bus 1510 for use by the processor from an external input device 1512, such as a keyboard containing alphanumeric keys operated by a human user, or a sensor. A sensor detects conditions in its vicinity and transforms those detections into physical expression compatible with the measurable phenomenon used to represent information in computer system 1500. Other external devices coupled to bus 1510, used primarily for interacting with humans, include a display device 1514, such as a cathode ray tube (CRT) or a liquid crystal display (LCD), or plasma screen or printer for presenting text or images, and a pointing device 1516, such as a mouse or a trackball or cursor direction keys, or motion sensor, for controlling a position of a small cursor image presented on the display 1514 and issuing commands associated with graphical elements presented on the display 1514. In some embodiments, for example, in embodiments in which the computer system 1500 performs all functions automatically without human input, one or more of external input device 1512, display device 1514 and pointing device 1516 is omitted.

In the illustrated embodiment, special purpose hardware, such as an application specific integrated circuit (ASIC) 1520, is coupled to bus 1510. The special purpose hardware is configured to perform operations not performed by processor 1502 quickly enough for special purposes. Examples of application specific ICs include graphics accelerator cards for generating images for display 1514, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1500 also includes one or more instances of a communications interface 1570 coupled to bus 1510. Communication interface 1570 provides a one-way or two-way communication coupling to a variety of external devices that operate with their own processors, such as printers, scanners and external disks. In general the coupling is with a network link 1578 that is connected to a local network 1580 to which a variety of external devices with their own processors are connected. For example, communication interface 1570 may be a parallel port or a serial port or a universal serial bus (USB) port on a personal computer. In some embodiments, communications interface 1570 is an integrated services digital network (ISDN) card or a digital subscriber line (DSL) card or a telephone modem that provides an information communication connection to a corresponding type of telephone line. In some embodiments, a communication interface 1570 is a cable modem that converts signals on bus 1510 into signals for a communication connection over a coaxial cable or into optical signals for a communication connection over a fiber optic cable. As another example, communications interface 1570 may be a local area network (LAN) card to provide a data communication connection to a compatible LAN, such as Ethernet. Wireless links may also be implemented. For wireless links, the communications interface 1570 sends or receives or both sends and receives electrical, acoustic or electromagnetic signals, including infrared and optical signals, that carry information streams, such as digital data. For example, in wireless handheld devices, such as mobile telephones like cell phones, the communications interface 1570 includes a radio band electromagnetic transmitter and receiver called a radio transceiver. In certain embodiments, the communications interface 1570 enables connection to the communication network 129 for providing localization through multiple triangulation processes.

The term computer-readable medium is used herein to refer to any medium that participates in providing information to processor 1502, including instructions for execution. Such a medium may take many forms, including, but not limited to, non-volatile media, volatile media and transmission media. Non-volatile media include, for example, optical or magnetic disks, such as storage device 1508. Volatile media include, for example, dynamic memory 1504. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1578 typically provides information communication using transmission media through one or more networks to other devices that use or process the information. For example, network link 1578 may provide a connection through local network 1580 to a host computer 1582 or to equipment 1584 operated by an Internet Service Provider (ISP). ISP equipment 1584 in turn provides data communication services through the public, world-wide packet-switching communication network of networks now commonly referred to as the Internet 1590.

A computer called a server host 1592 connected to the Internet hosts a process that provides a service in response to information received over the Internet. For example, server host 1592 hosts a process that provides information representing video data for presentation at display 1514. It is contemplated that the components of system can be deployed in various configurations within other computer systems, e.g., host 1582 and server 1592.

FIG. 16 illustrates a diagram of a chip set 1600 upon which an embodiment of the invention may be implemented. Chip set 1600 is programmed to provide localization through multiple triangulation processes as described herein and includes, for instance, the processor and memory components described with respect to FIG. 15 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1600 includes a communication mechanism such as a bus 1601 for passing information among the components of the chip set 1600. A processor 1603 has connectivity to the bus 1601 to execute instructions and process information stored in, for example, a memory 1605. The processor 1603 may include one or more processing cores with each core configured to perform independently. A multi-core processor enables multiprocessing within a single physical package. Examples of a multi-core processor include two, four, eight, or greater numbers of processing cores. Alternatively or in addition, the processor 1603 may include one or more microprocessors configured in tandem via the bus 1601 to enable independent execution of instructions, pipelining, and multithreading. The processor 1603 may also be accompanied with one or more specialized components to perform certain processing functions and tasks such as one or more digital signal processors (DSP) 1607, or one or more application-specific integrated circuits (ASIC) 1609. A DSP 1607 typically is configured to process real-world signals (e.g., sound) in real time independently of the processor 1603. Similarly, an ASIC 1609 can be configured to perform specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1603 and accompanying components have connectivity to the memory 1605 via the bus 1601. The memory 1605 includes both dynamic memory (e.g., RAM, magnetic disk, writable optical disk, etc.) and static memory (e.g., ROM, CD-ROM, etc.) for storing executable instructions that when executed perform the inventive steps described herein to provide localization through multiple triangulation processes. The memory 1605 also stores the data associated with or generated by the execution of the inventive steps.

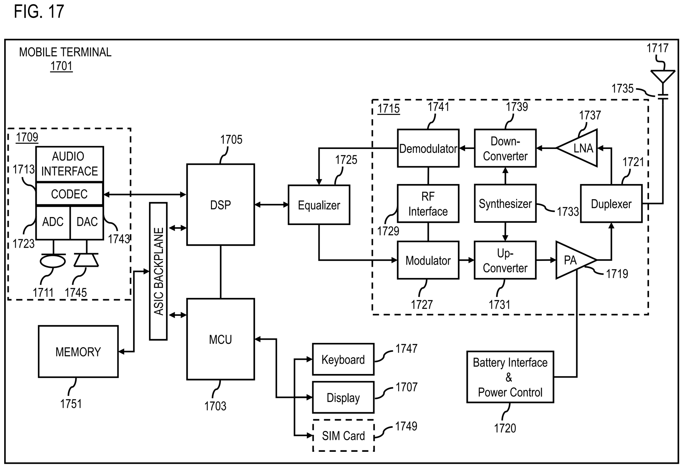

FIG. 17 illustrates a diagram of exemplary components of a mobile terminal capable of operating in the system of FIG. 1, according to one embodiment. In the illustrated embodiment, a mobile terminal 1700 is provided. Generally, a radio receiver is often defined in terms of front-end and back-end characteristics. The front end of the receiver encompasses all of the Radio Frequency (RF) circuitry whereas the back end encompasses all of the base-band processing circuitry. Pertinent internal components of the telephone include a Main Control Unit (MCU) 1703, a Digital Signal Processor (DSP) 1705, and a receiver/transmitter unit including a microphone gain control unit and a speaker gain control unit. A main display unit 1707 provides a display to the user in support of various applications and mobile station functions that offer automatic contact matching. An audio function circuitry 1709 includes a microphone 1711 and microphone amplifier that amplifies the speech signal output from the microphone 1711. The amplified speech signal output from the microphone 1711 is fed to a coder/decoder (CODEC) 1713.

A radio section 1715 amplifies power and converts frequency in order to communicate with a base station, which is included in a mobile communication system, via antenna 1717. The power amplifier (PA) 1719 and the transmitter/modulation circuitry are operationally responsive to the MCU 1703, with an output from the PA 1719 coupled to the duplexer 1721 or circulator or antenna switch, as known in the art. The PA 1719 also couples to a battery interface and power control unit 1720.

In use, a user of mobile station 1701 speaks into the microphone 1711 and his or her voice along with any detected background noise is converted into an analog voltage. The analog voltage is then converted into a digital signal through the Analog to Digital Converter (ADC) 1723. The control unit 1703 routes the digital signal into the DSP 1705 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, 5G New Radio networks, code division multiple access (CDMA), wireless fidelity (WiFi), satellite, and the like.

The encoded signals are then routed to an equalizer 1725 for compensation of any frequency-dependent impairments that occur during transmission though the air such as phase and amplitude distortion. After equalizing the bit stream, the modulator 1727 combines the signal with a RF signal generated in the RF interface 1729. The modulator 1727 generates a sine wave by way of frequency or phase modulation. In order to prepare the signal for transmission, an up-converter 1731 combines the sine wave output from the modulator 1727 with another sine wave generated by a synthesizer 1733 to achieve the desired frequency of transmission. The signal is then sent through a PA 1719 to increase the signal to an appropriate power level. In practical systems, the PA 1719 acts as a variable gain amplifier whose gain is controlled by the DSP 1705 from information received from a network base station. The signal is then filtered within the duplexer 1721 and optionally sent to an antenna coupler 1735 to match impedances to provide maximum power transfer. Finally, the signal is transmitted via antenna 1717 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1701 are received via antenna 1717 and immediately amplified by a low noise amplifier (LNA) 1737. A down-converter 1739 lowers the carrier frequency while the demodulator 1741 strips away the RF leaving only a digital bit stream. The signal then goes through the equalizer 1725 and is processed by the DSP 1705. A Digital to Analog Converter (DAC) 1743 converts the signal and the resulting output is transmitted to the user through the speaker 1745, all under control of a Main Control Unit (MCU) 1703-which can be implemented as a Central Processing Unit (CPU) (not shown).

The MCU 1703 receives various signals including input signals from the keyboard 1747. The keyboard 1747 and/or the MCU 1703 in combination with other user input components (e.g., the microphone 1711) comprise a user interface circuitry for managing user input. The MCU 1703 runs a user interface software to facilitate user control of at least some functions of the mobile station 1701 to provide localization through multiple triangulation processes. The MCU 1703 also delivers a display command and a switch command to the display 1707 and to the speech output switching controller, respectively. Further, the MCU 1703 exchanges information with the DSP 1705 and can access an optionally incorporated SIM card 1749 and a memory 1751. In addition, the MCU 1703 executes various control functions required of the station. The DSP 1705 may, depending upon the implementation, perform any of a variety of conventional digital processing functions on the voice signals. Additionally, DSP 1705 determines the background noise level of the local environment from the signals detected by microphone 1711 and sets the gain of microphone 1711 to a level selected to compensate for the natural tendency of the user of the mobile station 1701.

The CODEC 1713 includes the ADC 1723 and DAC 1743. The memory 1751 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1751 may be, but not limited to, a single memory, CD, DVD, ROM, RAM, EEPROM, optical storage, or any other non-volatile or non-transitory storage medium capable of storing digital data.

An optionally incorporated SIM card 1749 carries, for instance, important information, such as the cellular phone number, the carrier supplying service, subscription details, and security information. The SIM card 1749 serves primarily to identify the mobile station 1701 on a radio network. The card 1749 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus comprising at least one processor and at least one non-transitory memory including computer program code instructions, the computer program code instructions configured to, when executed, cause the apparatus to:
detect a plurality of objects from a set of images;
perform 3-point triangulation on the plurality of objects to generate a 3-point triangulation result;
perform one or more triangulations on the 3-point triangulation result to generate one or more triangulation results, wherein the one or more triangulations is 4-or-more-point triangulation, 2-point triangulation, or a combination thereof, and wherein the one or more triangulation results is a 4-or-more-point triangulation result, a 2-point triangulation result, or a combination thereof;
using a clustering model, consolidate the 3-point triangulation result and the one or more triangulation results as a consolidated localization result; and
output the consolidated localization result.

2. The apparatus of Claim 1, wherein the set of images is chronologically consecutive images captured by an image capture sensor that was in motion.

3. The apparatus of Claim 2, wherein the plurality of objects is grouped as one or more combinations, wherein each of the one or more combinations includes one of the plurality of objects for each of the set of images, and wherein, to perform the 3-point triangulation, the computer program code instructions are configured to, when executed, cause the apparatus to:
determine a direction of motion of the set of images;
based on the direction of motion, select from the one or more combinations to provide one or more selected combinations; and
perform the 3-point triangulation on the one or more selected combinations to generate the 3-point triangulation result.

4. The apparatus of Claim 3, wherein each of the one or more selected combinations indicates a set from the plurality of objects that is consistent with the direction of motion.

5. The apparatus of Claim 1, wherein, to perform the 3-point triangulation, the computer program code instructions are configured to, when executed, cause the apparatus to:
perform the 3-point triangulation on the plurality of objects to generate 3 dimensional (3D) coordinates;
project the 3D coordinates into 2 dimensional (2D) points corresponding to the plurality of objects to generate reprojection error for the 3D coordinates;
compare the reprojection error to a threshold value;
responsive to the reprojection error value satisfying the threshold value, include the 3D coordinates as a part of the 3-point triangulation result; and
responsive to the reprojection error failing to satisfy the threshold value, exclude the 3D coordinates as a part of the 3-point triangulation result.

6. The apparatus of Claim 1, wherein, to perform the 3-point triangulation, the computer program code instructions are configured to, when executed, cause the apparatus to:
perform the 3-point triangulation on the plurality of objects to generate 3 dimensional (3D) coordinates;
determine a distance between an image capture sensor that captured the set of images and the 3D coordinates;
compare the distance to a threshold distance;
responsive to the distance satisfying the threshold distance, include the 3D coordinates as a part of the 3-point triangulation result; and
responsive to the distance failing to satisfying the threshold distance, exclude the 3D coordinates as a part of the 3-point triangulation result.

7. The apparatus of Claim 1, wherein, to perform the 3-point triangulation, the computer program code instructions are configured to, when executed, cause the apparatus to:
perform the 3-point triangulation on the plurality of objects to generate 3 dimensional (3D) coordinates;
determine a direction from an image capture sensor that captured the set of images to the 3D coordinates;
determine an angle of the direction to a camera bearing;
compare the angle to a threshold angle;
responsive to the angle satisfying the threshold angle, include the 3D coordinates as a part of the 3-point triangulation result; and
responsive to the angle failing to satisfy the threshold angle, exclude the 3D coordinates as a part of the 3-point triangulation result.

8. The apparatus of Claim 1, wherein, to perform the 4-or-more-point triangulation, the computer program code instructions are configured to, when executed, cause the apparatus to:
determine whether the 3-point triangulation result indicates at least one of the plurality of objects that is used for performing the 3-point triangulation and one or more additional 3-point triangulations;
responsive to the 3-point triangulation result indicating the at least one of the plurality of objects that is used for performing the 3-point triangulation and the one or more additional 3-point triangulations, merge the 3-point triangulation result and one or more additional 3-point triangulation results from the one or more additional 3-point triangulations to form correspondences with 4 or more points; and
perform the 4-or-more-point triangulation on the 4 or more points to generate the 4-or-more-point triangulation result.

9. The apparatus of Claim 1, wherein, to perform the 2-point triangulation, the computer program code instructions are configured to, when executed, cause the apparatus to:
identify a subset of the set of images, wherein the subset includes:
(i) a first subset of the plurality of objects used for producing the 3-point triangulation result, the 4-or-more-point triangulation result, or a combination thereof; and
(ii) a second subset of the plurality of objects that is not used for producing any triangulation result;
use a plurality of points of the first subset to estimate a homography matrix from a first image of the subset to a second image of the subset;
apply the homography matrix to project a point of a first object of the second subset in the first image to the second image;
determine whether the point falls within a second object of the second subset in the second image; and
responsive to the point falling within the second object, provide the 2-point triangulation result to indicate that the first object and the second object are matched for establishing correspondence.

10. The apparatus of Claim 9, wherein, to perform the 2-point triangulation, the computer program code instructions are configured to, when executed, cause the apparatus to:
determine whether the 2-point triangulation result indicates at least one of the plurality of objects that is used for performing the 2-point triangulation and one or more additional 2-point triangulations;
responsive to the 2-point triangulation result indicating the at least one of the plurality of objects that is used for performing the 2-point triangulation and the one or more additional 2-point triangulations, merge the 2-point triangulation result and one or more additional 2-point triangulation results from the one or more additional 2-point triangulations to form correspondences with 3 or more points;
perform 3-or-more-point triangulation on the 3 or more points to generate a 3-or-more point triangulation result; and
provide the 3-or-more point triangulation result as a part of the one or more triangulation results.

11. A non-transitory computer-readable storage medium having computer program code instructions stored therein, the computer program code instructions, when executed by at least one processor, cause the at least one processor to:
detect a plurality of objects from a set of images;
perform 3-point triangulation on the plurality of objects to generate a 3-point triangulation result;
perform one or more triangulations on the 3-point triangulation result to generate one or more triangulation results, wherein the one or more triangulations is 4-or-more-point triangulation, 2-point triangulation, or a combination thereof, and wherein the one or more triangulation results is a 4-or-more-point triangulation result, a 2-point triangulation result, or a combination thereof; and
using a clustering model, consolidate the 3-point triangulation result and the one or more triangulation results as a consolidated localization result; and
output the consolidated localization result.

12. The non-transitory computer-readable storage medium of Claim 11, wherein the set of images is chronologically consecutive images captured by an image capture sensor that was in motion.

13. The non-transitory computer-readable storage medium of Claim 12, wherein the plurality of objects is grouped as one or more combinations, wherein each of the one or more combinations includes one of the plurality of objects for each of the set of images, and wherein, to perform the 3-point triangulation, the computer program code instructions, when executed by the at least one processor, cause the at least one processor to:
determine a direction of motion of the set of images;
based on the direction of motion, select from the one or more combinations to provide one or more selected combinations; and
perform the 3-point triangulation on the one or more selected combinations to generate the 3-point triangulation result.

14. The non-transitory computer-readable storage medium of Claim 11, wherein, to perform the 4-or-more-point triangulation, the computer program code instructions, when executed by the at least one processor, cause the at least one processor to:
determine whether the 3-point triangulation result indicates at least one of the plurality of objects that is used for performing the 3-point triangulation and one or more additional 3-point triangulations;
responsive to the 3-point triangulation result indicating the at least one of the plurality of objects that is used for performing the 3-point triangulation and the one or more additional 3-point triangulations, merge the 3-point triangulation result and one or more additional 3-point triangulation results from the one or more additional 3-point triangulations to form correspondences with 4 or more points; and
perform the 4-or-more-point triangulation on the 4 or more points to generate the 4-or-more-point triangulation result.

15. A method comprising:
detecting a plurality of objects from a set of images;
performing 3-point triangulation on the plurality of objects to generate a 3-point triangulation result;
performing one or more triangulations on the 3-point triangulation result to generate one or more triangulation results, wherein the one or more triangulations is 4-or-more-point triangulation, 2-point triangulation, or a combination thereof, and wherein the one or more triangulation results is a 4-or-more-point triangulation result, a 2-point triangulation result, or a combination thereof; and
using a clustering model, consolidating the 3-point triangulation result and the one or more triangulation results as a consolidated localization result; and
outputting the consolidated localization result.
